# EUROPEAN PATENT APPLICATION

(11) **EP 4 517 872 A1**
(43) Date of publication of application: **05.03.2025**
(21) Application number: 22966267.1
(22) Date of filing: 25.11.2022
(51) Int. Cl.: H01M 4/36, H01M 4/583

(54) **CARBON MATERIAL, PREPARATION METHOD THEREFOR, SECONDARY BATTERY COMPRISING SAME, AND ELECTRIC DEVICE**

(71) Applicant: Contemporary Amperex Technology (Hong Kong) Limited, Central, Central And Western District (HK)
(72) Inventor: CHEN, Yonghong, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2022/134452
(87) International publication number: WO 2024/108579

(57) **Abstract**

This application provides a carbon material, a preparation method thereof, and a secondary battery and electric apparatus containing the same. The carbon material includes a pore structure, and in a thermogravimetric analysis test of the carbon material under air atmosphere, a weight loss rate of the carbon material at 35°C to 790°C is less than or equal to 60%. The carbon material provided in this application enables the secondary battery to combine high initial coulombic efficiency and good storage performance.

## Description

### TECHNICAL FIELD

This application pertains to the field of battery technologies, and specifically relates to a carbon material, a preparation method thereof, and a secondary battery and an electric apparatus containing the same.

### BACKGROUND

In recent years, secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. With increasingly wide application of secondary batteries, there are more demanding requirements for their performance, such as the need for secondary batteries to combine the energy density, service life, and other performances. As an important component of secondary batteries, the negative electrode active material affects the performance of secondary batteries. Currently, the negative electrode active material mainly includes graphite. However, in the prior art, it is difficult for high-capacity graphite to achieve high initial coulombic efficiency while also causing rapid capacity decay during the storage of the secondary battery.

### SUMMARY

An objective of this application is to provide a carbon material, a preparation method thereof, and a secondary battery and electric apparatus containing the same, so as to enable the secondary battery to combine high initial coulombic efficiency and good storage performance.

A first aspect of this application provides a carbon material, where the carbon material includes a pore structure, and in a thermogravimetric analysis test of the carbon material under air atmosphere, a weight loss rate of the carbon material at 35°C to 790°C is less than or equal to 60%.

The weight loss rate of the carbon material at 35°C to 790°C can reflect the chemical stability of the carbon material. The carbon material of this application has a smaller weight loss rate at 35°C to 790°C. Therefore, the carbon material of this application can have fewer surface defects and/or bulk phase defects, which can reduce the active ions consumed for formation of SEI and active ions consumed during storage of the secondary battery. The carbon material provided in this application includes a pore structure, where the pore structure can reserve a required expansion space for volume changes of the carbon material particles, which can reduce the risk of fragmentation of the carbon material particles producing new interfaces, thereby reducing the side reactions that occur and decreasing the active ions consumed. Therefore, the carbon material provided in this application can enable the secondary battery using the carbon material to combine high initial coulombic efficiency and good storage performance.

In any embodiment of this application, the weight loss rate of the carbon material at 35°C to 790°C is 5%-55%, and optionally 15%-45%. At this point, the secondary battery using the carbon material can have higher initial coulombic efficiency and better storage performance.

In any embodiment of this application, in the thermogravimetric analysis test of the carbon material under air atmosphere, a maximum weight loss rate of the carbon material is less than or equal to 5.5%/min, and optionally 0.5%/min-5%/min. The carbon material has a lower maximum weight loss rate when sintered in an air atmosphere. Therefore, the carbon material can have fewer surface defects and/or bulk phase defects, which can reduce the active ions consumed. Consequently, the secondary battery using the carbon material can have higher initial coulombic efficiency and better storage performance.

In any embodiment of this application, in the thermogravimetric analysis test of the carbon material under air atmosphere, a temperature corresponding to the maximum weight loss rate of the carbon material is denoted as Tₘₐₓ, where Tₘₐₓ is 790°C-910°C, and optionally 800°C-850°C. In this way, the secondary battery using the carbon material can have higher initial coulombic efficiency and better storage performance.

In any embodiment of this application, in the thermogravimetric analysis test of the carbon material under air atmosphere, an initial weight loss temperature of the carbon material is denoted as T₀, where T₀ is 725°C-900°C, and optionally 728°C-785°C. This can improve the initial coulombic efficiency and storage performance of the secondary battery.

In any embodiment of this application, the carbon material includes more than one pore structure with a pore area greater than or equal to 0.1 µm², and optionally includes more than one pore structure with a pore area of 0.12 µm²-1.5 µm². When the carbon material includes the pore structure with the pore area as described above, the pore structure can reserve the required expansion space for volume changes of the carbon material particles, which can further reduce the risk of fragmentation of the carbon material particles producing new interfaces, thereby reducing the side reactions that occur, decreasing the irreversible capacity loss of the secondary battery, and improving the storage performance and cycling performance of the secondary battery.

In any embodiment of this application, the carbon material includes an exterior zone and an interior zone located inside the exterior zone, where the exterior zone is a zone extending from the surface of the carbon material particle to the interior of the particle by a distance of 0.25 L, L refers to a short-axis length of the carbon material particle, a total pore area of the exterior zone is denoted as S₁, a total pore area of the interior zone is denoted as S₂, and S₂>S₁.

In any embodiment of this application, 1.5≤S₂/S₁≤400, and optionally 2≤S₂/S₁≤200.

This can effectively reduce the irreversible capacity loss of the secondary battery, improve the capacity performance of the secondary battery, and enable the secondary battery to better combine high initial coulombic efficiency and good storage performance and cycling performance.

In any embodiment of this application, 0.01 µm²≤S₁≤5.5 µm², and optionally, 0.06 µm²≤S₁≤4.5 µm². With the total pore area of the exterior zone of the carbon material falling within the foregoing range, the carbon material particles can have a more stable structure, and the electrolyte can be prevented from seeping into the pore structures inside the carbon material particles as much as possible, thereby reducing the side reactions that occur and decreasing the active ions consumed for formation of SEI inside the carbon material particles; and in addition, the transmission performance of active ions and electrons are not affected.

In any embodiment of this application, 2.5 µm²≤S₂≤25.0 µm², and optionally, 4.0 µm²≤S₂≤15.0 µm². With the total pore area of the interior zone of the carbon material falling within the foregoing range, a sufficient and stable expansion space can be reserved for volume changes of the carbon material particles, which reduces the risk of fragmentation of the carbon material particles producing new interfaces, reduces the surface side reactions that occur on the new interfaces, and reduces the active ions consumed for formation of SEI on the surface of the new interfaces; and in addition, the capacity and the initial coulombic efficiency of the carbon material can also be increased.

In any embodiment of this application, L≥7 µm, and optionally, 7 µm≤L≤18 µm.

In any embodiment of this application, an area of the pore structure in the exterior zone of the carbon material is less than 0.2 µm², and optionally less than or equal to 0.12 µm². With the area of the pore structure in the exterior zone of the carbon material being controlled in the foregoing range, the carbon material particles can have a dense structure in the exterior zone, which can effectively improve the structural stability of the carbon material and prevent the electrolyte from seeping into the pore structures inside the carbon material particles as far as possible, thereby effectively improving the initial coulombic efficiency, storage performance, and cycling performance of the secondary battery.

In any embodiment of this application, the interior zone of the carbon material includes more than one pore structure with an area greater than or equal to 0.12 µm², and optionally includes more than one pore structure with an area of 0.12 µm²-2.5 µm². With the interior zone of the carbon material including the pore structure with the foregoing size, a sufficient and stable expansion space can be reserved for volume changes of the carbon material particles, which reduces the risk of fragmentation of the carbon material particles; and in addition, the compacted density of the carbon material and the energy density of the secondary battery can also be improved.

In any embodiment of this application, an interlayer spacing in the exterior zone of the carbon material is denoted as d₁, an interlayer spacing in the interior zone of the carbon material is denoted as d₂, and the carbon material satisfies d₁≥d₂, and optionally, d₁>d₂.

A larger interlayer spacing in the exterior zone of the carbon material is more favorable to the rapid intercalation and deintercalation of active ions, which can further improve the kinetic performance of the secondary battery; and a smaller interlayer spacing in the interior zone of the carbon material is favorable to the improvement of the gram capacity and compacted density of the carbon material, which can further improve the energy density of the secondary battery.

In any embodiment of this application, d₁ is 0.33565 nm-0.33620 nm.

In any embodiment of this application, d₂ is 0.33557 nm-0.33589 nm.

In any embodiment of this application, a specific surface area of the carbon material is 0.7 m²/g-1.6 m²/g, and optionally 0.8 m²/g-1.4 m²/g. The carbon material of this application has a lower specific surface area and a lower surface activity, and thus can reduce the active ions consumed for formation of SEI and improve the initial coulombic efficiency of the carbon material and the storage performance of the secondary battery.

In any embodiment of this application, a particle size by volume Dᵥ50 of the carbon material is 10.0 µm-20.0 µm, and optionally 12.0 µm-18.0 µm.

In any embodiment of this application, a particle size by volume Dᵥ10 of the carbon material is 4.0 µm-13.0 µm, and optionally 6.0 µm-11.0 µm.

In any embodiment of this application, a particle size by volume Dᵥ90 of the carbon material is 25.0 µm-35.0 µm, and optionally 27.0 µm-32.0 µm.

With the particle size by volume Dᵥ10, Dᵥ50, and/or Dᵥ90 of the carbon material falling within the foregoing range, it is favorable to improve the transmission performance of active ions and electrons, thereby further improving the cycling performance and kinetic performance of the secondary battery.

In any embodiment of this application, a particle size distribution (Dᵥ90-Dᵥ10)/Dᵥ50 of the carbon material is 0.90-1.10, and optionally 0.95-1.05. This is favorable to increase the compacted density of the carbon material, thereby further increasing the energy density of the secondary battery.

In any embodiment of this application, the carbon material is in one or more of block-shaped, spherical, and spheroidal morphologies. This is favorable to increase the compacted density of the negative electrode plate, thereby increasing the energy density of the secondary battery.

In any embodiment of this application, a tap density of the carbon material is 1.0 g/cm³-1.5 g/cm³, and optionally 1.1 g/cm³-1.4 g/cm³. With the tap density of the carbon material falling within the foregoing range, the compacted density of the negative electrode plate can be increased, thereby increasing the energy density of the secondary battery; and it is also favorable to improve the transmission performance of active ions and electrons and to improve the cycling performance and kinetic performance of the secondary battery.

In any embodiment of this application, a gram capacity of the carbon material is 350 mAh/g-372 mAh/g, and optionally 353 mAh/g-371 mAh/g. With the gram capacity of the carbon material falling within the foregoing range, the energy density of the secondary battery can be increased.

In any embodiment of this application, a degree of graphitization of the carbon material is 91.5%-98.5%, and optionally 92.5%-98.0%. With the degree of graphitization of the carbon material falling within the foregoing range, it is favorable for the secondary battery to combine high energy density and a good cycling performance, storage performance, and/or kinetic performance.

A second aspect of this application provides a preparation method of carbon material, including the following steps: step 1, providing a raw material having a plurality of pore structures; step 2, mixing the raw material with a filling material homogeneously at a predetermined ratio, and leaving the resulting product standing at a first temperature T₁ for a first time t₁ to obtain an intermediate; and step 3, leaving the resulting intermediate standing at a second temperature T₂ for a second time t₂ to obtain a carbon material, where the carbon material includes a pore structure, and in a thermogravimetric analysis test of the carbon material under air atmosphere, a weight loss rate of the carbon material at 35°C to 790°C is less than or equal to 60%.

In any embodiment of this application, the raw material includes natural graphite, and optionally the natural graphite includes one or more of flake graphite, natural spherical graphite, and microcrystalline graphite;

In any embodiment of this application, a particle size by volume Dᵥ50 of the raw material is 10.0 µm-20.0 µm, and optionally 12.0 µm-18.0 µm.

In any embodiment of this application, a percentage of element carbon in the raw material is greater than or equal to 90.0wt%, and optionally greater than or equal to 95.0wt%.

In any embodiment of this application, a particle size by volume Dᵥ50 of the filling material is less than or equal to 6 µm, and optionally 2 µm-5 µm.

In any embodiment of this application, a softening point temperature of the filling material is 80°C-150°C, and optionally 90°C-140°C;

In any embodiment of this application, a coking value of the filling material is 15%-40%, and optionally 15%-35%.

In any embodiment of this application, the filling material includes one or more of coal asphalt, petroleum asphalt, polymer compounds, and resins, and optionally includes petroleum asphalt.

In any embodiment of this application, a mass ratio of the filling material to the raw material is (10-35):100, and optionally (15-32):100.

With one or more parameters of type, softening point, coking value, and addition amount of the filling material adjusted in the foregoing range(s), it is favorable to adjust the weight loss rate of the carbon material to be within a suitable range, and it is also favorable to adjust the pore sizes and/or the number of pores in the exterior zone and the interior zone of the carbon material to be within suitable ranges; and in addition, after being heated and melted, the filling material has a low viscosity, maintains a good flowability, and is not easy to adhere to the particles of the raw material, which can reduce agglomeration of the particles in the subsequent preparation process, can reduce problems such as increased surface defects of the carbon material particles and increased surface side-reaction active sites caused by the need to increase the depolymerization process, and thus also can be favorable to further reduce the weight loss rate of the carbon material.

In any embodiment of this application, after the mixing the raw material with a filling material homogeneously at a predetermined ratio, the process of heating up to the first temperature T₁ is a staged heating process, and optionally includes a first heating process and a second heating process.

In any embodiment of this application, the first heating process is heating up to 200°C-250°C and holding at that temperature for 1h-3h.

In any embodiment of this application, the second heating process is heating to the first temperature T₁ and holding at that temperature for the first time t₁.

In any embodiment of this application, a heating rate of the first heating process is 1°C/min-10°C/min, and optionally 1.5°C/min-8°C/min.

In any embodiment of this application, a heating rate of the second heating process is 2°C/min-10°C/min, and optionally 2.5°C/min-8°C/min.

In any embodiment of this application, the first temperature T₁ is 700°C-1200°C, and optionally 800°C-1100°C.

In any embodiment of this application, the first time t₁ is 1h-5h, and optionally 2h-4h.

With one or more of the heating rate, the first temperature, the first time, the heating process, and the like adjusted in the foregoing range(s), it is favorable to adjust the weight loss rate, maximum weight loss rate, initial weight loss temperature T₀ and/or temperature Tₘₐₓ corresponding to the maximum weight loss rate of the carbon material to be within suitable range(s), and it is also favorable to adjust the pore sizes and/or the number of pores in the exterior zone and the interior zone of the carbon material to be within suitable ranges.

In any embodiment of this application, the second temperature T₂ is 2000°C-2700°C, and optionally 2100°C-2600°C.

In any embodiment of this application, the second time t₂ is 1.5h-6h, and optionally 2h-5h.

With one or more of the second temperature and the second time adjusted in the foregoing range(s), it is favorable to adjust the weight loss rate, maximum weight loss rate, initial weight loss temperature T₀ and/or temperature Tₘₐₓ corresponding to the maximum weight loss rate of the carbon material to be within suitable range(s).

A third aspect of this application provides a secondary battery including a negative electrode plate, where the negative electrode plate includes the carbon material according to the first aspect of this application or a carbon material prepared using the method according to the second aspect of this application.

A fourth aspect of this application provides an electric apparatus including the secondary battery according to the third aspect of this application.

The carbon material provided in this application can enable the secondary battery using the carbon material to combine high initial coulombic efficiency and good storage performance. The electric apparatus in this application includes the secondary battery provided in this application, and therefore has at least advantages that are the same as those of the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show only some embodiments of this application, and a person of ordinary skill in the art may still derive other drawings from these accompanying drawings without creative efforts.
FIG. 1 is a schematic diagram of a cross-sectional image of a particle of a carbon material of this application.
FIG. 2 is a schematic diagram of an embodiment of a secondary battery in this application.
FIG. 3 is a schematic exploded view of an embodiment of a secondary battery in this application.
FIG. 4 is a schematic diagram of an embodiment of a battery module in this application.
FIG. 5 is a schematic diagram of an embodiment of a battery pack in this application.
FIG. 6 is a schematic exploded view of the embodiment of the battery pack shown in FIG. 5.
FIG. 7 is a schematic diagram of an embodiment of an electric apparatus including the secondary battery of this application as a power source.
FIG. 8 is a thermogravimetric curve and a thermogravimetric differential curve of the carbon material prepared in Example 2.
FIG. 9 is a thermogravimetric curve and a thermogravimetric differential curve of the carbon material prepared in Comparative Example 2.

In the accompanying drawings, the figures are not necessarily drawn to scale. Reference signs are as follows: 1. battery pack; 2. upper box body; 3. lower box body; 4. battery module; 5. secondary battery; 51. housing; 52. electrode assembly; 53. cover plate; 100. carbon material; 101. exterior zone; and 102. interior zone.

### DESCRIPTION OF EMBODIMENTS

The following specifically discloses in detail embodiments of a carbon material, a preparation method thereof, and a secondary battery and an electric apparatus including the same of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be combined to be included in the disclosure of this application.

Unless otherwise specified, all the technical features and optional technical features of this application can be combined with each other to form new technical solutions, and such technical solutions should be combined to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, the terms used in this application have well known meanings as commonly understood by persons skilled in the art.

Unless otherwise specified, numerical values of parameters mentioned in this application may be determined by using various test methods commonly used in the art, for example, they may be determined using the test methods provided in this application.

Unless otherwise specified, in this application, the term "active ions" is ions, including but not limited to lithium ions, that can intercalate and deintercalate between the positive electrode and the negative electrode of the battery.

In this application, the term "a plurality of" means two or more than two and the term "a plurality of types" means two types or more than two types.

Depending on the preparation process or source, graphite can be classified into artificial graphite and natural graphite. The preparation of artificial graphite generally requires a high-temperature graphitization process, which consumes high energy and costs, resulting in a high cost of artificial graphite. Natural graphite comes from nature and therefore has the advantage of relatively low cost. In addition, natural graphite has the advantage of high capacity and high compacted density.

Natural graphite mainly includes flake graphite, natural spherical graphite, and microcrystalline graphite. Generally different from artificial graphite, natural graphite has many pores and defects inside and outside the particles. During the first charge of the secondary battery, many side reactions occur between the electrolyte and the pores on particle surfaces and inside the particles, resulting in high first-time irreversible capacity loss, low initial coulombic efficiency, and poor storage performance of the secondary battery. In particular, flake graphite and natural spherical graphite have high crystallinity and graphitization, and their microstructures are mostly layered. This structure results in large volume change in the natural graphite during intercalation and deintercalation of active ions. This easily leads to fragmentation of the layered structure and particles of the graphite. After the particles are fragmented, the exposed fresh surfaces continue to react with the electrolyte, which further increases the irreversible capacity loss of the secondary battery.

Currently, the performance of natural graphite is mainly improved by particle surface coating treatment and/or particle internal filling treatment.

The particle surface coating treatment mainly includes mixing the natural graphite with an enveloping agent (for example, bitumen and polymer compound) and then performing thermal treating to envelop the surface of the natural graphite particles with an amorphous carbon layer, which slightly repairs defects on the surface of the particles. However, the inventors of this application have found in the course of research that the surface-coated amorphous carbon layer would lead to a reduction in the gram capacity and/or compacted density of the natural graphite, which affects the energy density of the secondary battery; and in addition, the surface-coated amorphous carbon layer could not effectively prevent the electrolyte from seeping into the internal pore structures of the particles, which results in limited improvement in the initial coulombic efficiency and storage performance of the secondary battery.

The particle internal filling treatment mainly includes mixing the natural graphite with a filling agent (for example, bitumen and polymer compound), and filling the filling agent into the internal pores of the particles through preset pressure, vacuuming, and heating, so as to produce natural graphite with no pores inside the particles. However, the inventors of this application have found in the course of research that the large amount of carbon filled inside the particles, especially the soft carbon, leads to a decrease in both the gram capacity and the compacted density of the natural graphite, which affects the energy density of the secondary battery; and consequently, as the pores inside the natural graphite particles are all filled with carbon, the natural graphite has a large change in volume during intercalation and deintercalation of active ions, the particles are more easily broken, which leads to repeated destruction and reconstruction of the SEI on the particle surface, further increasing the active ions irreversibly consumed, increasing the irreversible capacity loss of the secondary battery, and shortening the service life of the secondary battery. In the prior art, an amorphous carbon layer is also enveloped on the surface of the natural graphite that has no pores inside the particles, which results in a further decrease in the gram capacity and/or the compacted density of the natural graphite, and in this case, there are still many defects on the surface of the particles, and thus the service life of the secondary battery cannot be effectively improved.

Therefore, although modification on the natural graphite through the foregoing particle surface coating treatment and/or particle internal filling treatment can, to a certain extent, reduce the irreversible capacity loss of the secondary battery and improve the initial coulombic efficiency of the secondary battery, its improvement effect on the initial coulombic efficiency and storage performance of the secondary battery is limited.

In view of this, the inventors of this application have proposed, after extensive research, a novel carbon material that enables the secondary battery to combine high initial coulombic efficiency and good storage performance.

### Carbon material

A first aspect of the embodiments of this application provides a carbon material, where the carbon material includes a pore structure, and in a thermogravimetric analysis test (TG test) of the carbon material under air atmosphere, a weight loss rate of the carbon material at 35°C to 790°C is less than or equal to 60%.

The inventors have found in the course of research that the weight loss rate of the carbon material at 35°C to 790°C can reflect the chemical stability of the carbon material. The carbon material of this application has a smaller weight loss rate at 35°C to 790°C. Therefore, the carbon material of this application can have fewer surface defects and/or bulk phase defects, which can reduce the active ions consumed for formation of SEI and active ions consumed during storage of the secondary battery.

The carbon materials provided in this application include a pore structure. In this application, "the carbon material includes a pore structure" means that the carbon material has a pore structure that is directly recognizable from a cross-sectional image (for example, a scanning electron microscope image with a magnification of 1000x), in other words, the pore structure in the raw material used to prepare the carbon material is not completely filled. Therefore, the carbon material provided in this application includes a pore structure, where the pore structure can reserve a required expansion space for volume changes of the carbon material particles, which can reduce the risk of fragmentation of the carbon material particles producing new interfaces, thereby reducing the side reactions that occur and decreasing the active ions consumed.

Therefore, the carbon material provided in this application can enable the secondary battery using the carbon material to combine high initial coulombic efficiency and good storage performance.

With the weight loss rate of the carbon material at 35°C to 790°C being greater than 60%, the carbon material particles have more surface defects and/or bulk phase defects, and consequently, more active ions are consumed during formation of SEI, and more active ions are also consumed during storage of the secondary battery. In this case, it is difficult to combine high initial coulombic efficiency and good storage performance of the secondary battery.

In some embodiments, the weight loss rate of the carbon material at 35°C to 790°C is less than or equal to 55%, and optionally 5%-55%, 10%-50%, 15%-45%, or 18%-45%. The inventors have found in further research that when the weight loss rate of the carbon material at 35°C to 790°C is in the foregoing ranges, the secondary battery using such carbon material can have higher initial coulombic efficiency and better storage performance.

In some embodiments, in the thermogravimetric analysis test of the carbon material under air atmosphere, a maximum weight loss rate of the carbon material is less than or equal to 5.5%/min, and optionally 0.5%/min-5%/min, 0.8%/min-4%/min, 1%/min-4%/min, or 1.2%/min-3.5%/min. The carbon material has a lower maximum weight loss rate when sintered in an air atmosphere, meaning that the carbon material can have fewer surface defects and/or bulk phase defects, which can reduce the active ions consumed. Consequently, the secondary battery using the carbon material can have higher initial coulombic efficiency and better storage performance.

In some embodiments, in the thermogravimetric analysis test of the carbon material under air atmosphere, a temperature corresponding to the maximum weight loss rate of the carbon material is denoted as Tₘₐₓ, where Tₘₐₓ is greater than or equal to 790°C, and optionally 790°C-910°C, 800°C-880°C, 800°C-850°C, or 810°C-850°C. The carbon material of this application has a high temperature Tₘₐₓ corresponding to the maximum weight loss rate, which indicates that the carbon material has good thermal stability and low reactivity. Therefore, the carbon material of this application can have fewer surface defects and/or bulk phase defects, which can reduce the active ions consumed for formation of SEI and the active ions consumed during storage of the secondary battery. Therefore, the secondary battery using the carbon material can have higher initial coulombic efficiency and better storage performance.

In some embodiments, in the thermogravimetric analysis test of the carbon material under air atmosphere, an initial weight loss temperature of the carbon material is denoted as T₀, where T₀ is greater than or equal to 725°C, and optionally 725°C-900°C, 726°C-850°C, 727°C-800°C, 728°C-785°C, or 730°C-785°C. The carbon material of this application has a high initial weight loss temperature T₀, which indicates that the carbon material has good thermal stability and low reactivity. Therefore, the carbon material of this application can have fewer surface defects and/or bulk phase defects, for example, fewer number of active functional groups on the particle surface, which results in fewer active ions consumed by the active functional groups during formation and storage of the film. In this way, the carbon material of this application can improve the initial coulombic efficiency and storage performance of the secondary battery.

For thermogravimetric analysis test of carbon material, refer to JY/T 014-1996. This application may alternatively be performed under the following conditions: weighing mass of the sample being 10±0.05 mg, the purge gas being air at an airflow rate of 60 mL/min, the heating rate being 5°C/min, and the test temperature range being 35°C to 950°C. Test instrument may be NETZSCH STA 449F3 synchronous thermal analyzer from NETZSCH Instruments, Germany.

In this application, the initial weight loss temperature T₀ of the carbon material is a temperature corresponding to the intersection point of the tangent line at the front level of the thermogravimetric curve step and the tangent line at the maximum weight loss rate of the carbon material.

In this application, the temperature Tₘₐₓ corresponding to the maximum weight loss rate of the carbon material is the peak temperature of the thermogravimetric differential curve of the carbon material.

In some embodiments, the carbon material includes more than one pore structure with a pore area greater than or equal to 0.1 µm², and optionally includes more than one pore structure with a pore area of 0.12 µm²-1.5 µm². The inventors have found in further research that when the carbon material includes the pore structure with the pore area as described above, the pore structure can reserve the required expansion space for volume changes of the carbon material particles, which can further reduce the risk of fragmentation of the carbon material particles producing new interfaces, thereby reducing the side reactions that occur, decreasing the irreversible capacity loss of the secondary battery, and improving the storage performance and cycling performance of the secondary battery.

In some embodiments, the carbon material includes an exterior zone and an interior zone located inside the exterior zone, where the exterior zone is a zone extending from the surface of the carbon material particle to the interior of the particle by a distance of 0.25 L, L refers to a short-axis length of the carbon material particle, a total pore area of the exterior zone is denoted as S₁, a total pore area of the interior zone is denoted as S₂, and S₂>S₁.

The inventors have found in further research that when the carbon material further satisfies S₂>S₁, the carbon material particle may have the following characteristics: a high number of pores and/or a large pore size in the interior zone and a low number of pores and/or a small pore size in the exterior zone. The high number of pores and/or the large pore size in the interior zone of the carbon material allow the pore structure to reserve the required expansion space for volume changes of the carbon material particles, which reduces the risk of fragmentation of the carbon material particles producing new interfaces, thereby reducing the side reactions that occur, reducing the irreversible capacity loss of the secondary battery, and improving the storage and cycling performance of the secondary battery; and the low number of pores and/or the small pore size in the exterior zone of the carbon material allow the carbon material particles to have a more stable structure and to avoid the electrolyte from seeping into the internal pore structures of the carbon material particles as much as possible, so as to reduce the side reactions that occur and reduce the active ions consumed for formation of SEI inside the particles, thereby increasing the initial coulombic efficiency of the carbon material, and further improving the storage performance and cycling performance of the secondary battery.

Therefore, when the carbon material further satisfies S₂>S₁, this can effectively reduce the irreversible capacity loss of the secondary battery, improve the capacity performance of the secondary battery, and enable the secondary battery to better combine high initial coulombic efficiency and good storage performance and cycling performance.

In some embodiments, 1.5≤S₂/Si≤400, 1.6≤S₂/S₁≤350, 1.8≤S₂/S₁≤300, 2≤S₂/S₁≤200, 3≤S₂/S₁≤180, or 3.5≤S₂/S₁≤150. The inventors have found in further research that when S₂/S₁ further satisfies the foregoing range, the initial coulombic efficiency and good storage performance of the secondary battery can be better combined.

In some embodiments, 0.01 µm²≤S₁≤5.5 µm², and optionally, 0.01 µm²≤S₁≤5.0 µm², 0.06 µm² ≤S₁≤4.5 µm², 0.08 µm² ≤S₁≤4.0 µm², or 0.09 µm ² ≤S₁≤3.5 µm². With the total pore area of the exterior zone of the carbon material falling within the foregoing range, the carbon material particles can have a more stable structure, and the electrolyte can be prevented from seeping into the pore structures inside the carbon material particles as much as possible, thereby reducing the side reactions that occur and decreasing the active ions consumed for formation of SEI inside the carbon material particles; and in addition, the transmission performance of active ions and electrons are not affected.

In some embodiments, 2.5 µm²≤ S₂≤25.0 µm², and optionally, 3.0 µm²≤S₂≤22.5 µm², or 4.0 µm²≤S₂≤15.0 µm². With the total pore area of the interior zone of the carbon material falling within the foregoing range, a sufficient and stable expansion space can be reserved for volume changes of the carbon material particles, which reduces the risk of fragmentation of the carbon material particles producing new interfaces, reduces the surface side reactions that occur on the new interfaces, and reduces the active ions consumed for formation of SEI on the surface of the new interfaces; and in addition, the capacity and the initial coulombic efficiency of the carbon material can also be increased.

In this application, the total pore area S₁ of the exterior zone and the total pore area S₂ of the interior zone of the carbon material can be obtained by measuring a cross-sectional image of the carbon material.

In this application, the cross-sectional image of the carbon material includes a cross-sectional image passing through the particle center of the carbon material. The "particle center" refers to a range within a radius of 0.1 µm extending from the geometric center of the particle to the particle surface.

In this application, the short-axis length of the particle is a minimum value when a line connecting two points on the surface of the particle passes through the geometric center of the particle.

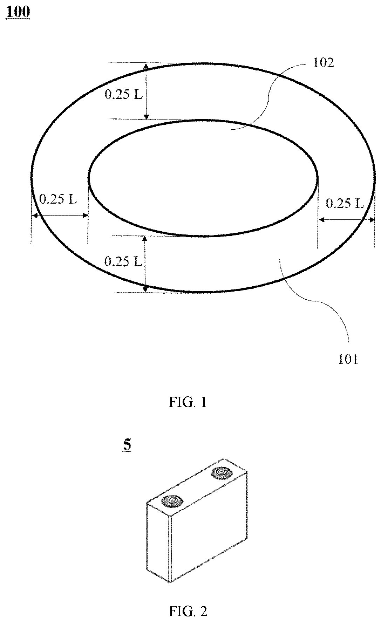

FIG. 1 is a schematic diagram of a cross-sectional image of a particle of a carbon material 100 of this application, where the cross-sectional image passes through the center of the particle of the carbon material 100. As shown in FIG. 1, L denotes a short-axis length of the particle of the carbon material 100, a zone extending from the particle surface of the carbon material 100 to the interior of the particle by a distance of 0.25 L is an exterior zone 101, and a zone inside the exterior zone 101 is an interior zone 102.

A cross-section of the carbon material can be prepared using a cross-section polisher (for example, Argon Ion Cross-Section Polisher Model IB-09010 CP from JEOL, Japan); then the cross-section of the carbon material is scanned using a scanning electron microscope (for example, Scanning Electron Microscope Model Sigma 300 from ZEISS, Germany) in accordance with JY/T010-1996; and finally, a total pore area S₁ of the exterior zone and a total pore area S₂ of the interior zone of the carbon material are calculated using image processing software (for example, AVIZO).

In some embodiments, L≥7 µm, and optionally 7 µm≤L≤18 µm, 8 µm≤L≤18 µm, or 8 µm≤L≤16 µm.

In some embodiments, an area of the pore structure in the exterior zone of the carbon material is less than 0.2 µm², and optionally less than or equal to 0.12 µm². The inventors have also found in further research that with the area of the pore structure in the exterior zone of the carbon material being controlled in the foregoing range, the carbon material particles can have a dense structure in the exterior zone, which can effectively improve the structural stability of the carbon material and prevent the electrolyte from seeping into the pore structures inside the carbon material particles as far as possible, thereby effectively improving the initial coulombic efficiency, storage performance, and cycling performance of the secondary battery. Certainly, this application does not intend to limit that all pore structures in the exterior zone of the carbon material have an area less than or equal to 0.2 µm². For example, more than 95%, and optionally, more than 99% of the pore structures can be controlled to have an area of less than or equal to 0.2 µm², and optionally, less than or equal to 0.12 µm².

In some embodiments, the interior zone of the carbon material includes more than one pore structure with an area greater than or equal to 0.12 µm², and optionally includes more than one pore structure with an area of 0.12 µm²-2.5 µm². The inventors have also found in further research that with the interior zone of the carbon material including the pore structure with the foregoing size, a sufficient and stable expansion space can be reserved for volume changes of the carbon material particles, which reduces the risk of fragmentation of the carbon material particles; and in addition, the compacted density of the carbon material and the energy density of the secondary battery can also be improved.

In some embodiments, an interlayer spacing in the exterior zone of the carbon material is denoted as d₁, an interlayer spacing in the interior zone of the carbon material is denoted as d₂, and the carbon material satisfies d₁≥d₂, and optionally, d₁>d₂.

A larger interlayer spacing in the exterior zone of the carbon material is more favorable to the rapid intercalation and deintercalation of active ions, which can further improve the kinetic performance of the secondary battery; and a smaller interlayer spacing in the interior zone of the carbon material is favorable to the improvement of the gram capacity and compacted density of the carbon material, which can further improve the energy density of the secondary battery.

In some embodiments, d₁ is 0.33565 nm-0.33620 nm.

In some embodiments, d₂ is 0.33557 nm-0.33589 nm.

Interlayer spacings in different zones of the carbon material particle can be determined using an instrument and a method well known in the art. For example, a high resolution transmission electron microscope (High Resolution Transmission Electron Microscope, HRTEM) can be used for testing. The test instrument may be a scanning transmission electron microscope Spectra S/TEM from Thermo Fisher.

In some embodiments, the carbon material is in one or more of block-shaped, spherical, and spheroidal morphologies. This is favorable to increase the compacted density of the negative electrode plate, thereby increasing the energy density of the secondary battery.

In some embodiments, the carbon material includes primary particles, and optionally, the primary particles in the carbon material account for greater than or equal to 50%, for example, may be 55%-95%, 60%-100%, 65%-90%, 65%-80%, 70%-100%, 75%-90%, 80%-100%, 90%-100%, or 95%-100%. The carbon material including an appropriate proportion of primary particles can make the carbon material have high structural stability and further reduce the side reactions that occur. In addition, the compacted density of the negative electrode plate can be increased, thereby increasing the energy density of the secondary battery.

In some embodiments, the carbon material may all be primary particles, meaning that the primary particles in the carbon material account for 100%.

Both primary particles and secondary particles have a meaning well known in the art. Primary particles are particles in a non-agglomerated state. Secondary particles are particles in an agglomerated state formed by the aggregation of two or more primary particles. Primary particles and secondary particles can be distinguished by using scanning electron microscope (SEM) images.

In this application, the proportion of primary particles in the carbon material by number may be determined according to the following test method: taking a test sample from any one of negative electrode film layers, selecting a plurality of test zones within the test sample, acquiring images of the plurality of test zones using a scanning electron microscope, and counting a proportion of the number of carbon material particles with primary particle morphology to a total number of carbon material particles in each image, where an average of multiple counting results is the proportion of the primary particles in the carbon material by number.

In some embodiments, a degree of graphitization of the carbon material is 91.5%-98.5%, and optionally 92.5%-98.0%, 93.5%-98.0%, or 94.0%-98.0%. With the degree of graphitization of the carbon material falling within the foregoing range, it is favorable for the secondary battery to combine high energy density and a good cycling performance, storage performance, and/or kinetic performance.

The degree of graphitization of the carbon material has a well-known meaning in the art, and can be tested using an instrument and a method well known in the art. For example, an X-ray diffractometer (for example, Bruker D8 Discover) can be used for testing. The testing can be carried out by referring to JIS K 0131-1996 and JB/T 4220-2011 to find an average interlayer spacing d₀₀₂ of (002) crystal plane in the crystal structure of the carbon material, and then the degree of graphitization is calculated according to the Mering-Maire formula, g=(0.344-d₀₀₂)/(0.344-0.3354)×100%. In the foregoing formula, d₀₀₂ is the average interlayer spacing of the (002) crystal plane in the crystal structure of the carbon material expressed in nanometers (nm).

In some embodiments, a specific surface area of the carbon material is 0.7 m²/g-1.6 m²/g, and optionally 0.8 m²/g-1.4 m²/g. The carbon material of this application has a lower specific surface area and a lower surface activity, and thus can reduce the active ions consumed for formation of SEI and improve the initial coulombic efficiency of the carbon material and the storage performance of the secondary battery.

The specific surface area of the carbon material has a well-known meaning in the art, and can be determined using an instrument and a method well known in the art. For example, the specific surface area can be tested using the nitrogen adsorption specific surface area analysis test method in accordance with GB/T 19587-2017 and calculated using the BET (Brunauer Emmett Teller) method. The nitrogen adsorption specific surface area analysis test can be carried out by using the Tri-Star 3020 specific surface area pore size analysis tester from Micromeritics in USA.

In some embodiments, a particle size by volume Dᵥ50 of the carbon material is 10.0 µm-20.0 µm, and optionally 12.0 µm-18.0 µm.

In some embodiments, a particle size by volume Dᵥ10 of the carbon material is 4.0 µm-13.0 µm, and optionally 6.0 µm-11.0 µm.

In some embodiments, a particle size by volume Dᵥ90 of the carbon material is 25.0 µm-35.0 µm, and optionally 27.0 µm-32.0 µm.

With the particle size by volume Dᵥ10, Dᵥ50, and/or Dᵥ90 of the carbon material falling within the foregoing range, it is favorable to improve the transmission performance of active ions and electrons, thereby further improving the cycling performance and kinetic performance of the secondary battery.

In some embodiments, a particle size distribution (Dᵥ90-Dᵥ10)/Dᵥ50 of the carbon material is 0.90-1.10, and optionally 0.95-1.05. With the particle size distribution (Dᵥ90-Dᵥ10)/Dᵥ50 of the carbon material falling within the foregoing range, it is favorable to increase the compacted density of the carbon material, thereby further increasing the energy density of the secondary battery.

The particle sizes by volume Dᵥ10, Dᵥ50, Dᵥ90 of the carbon material have the meanings well known in the art, represent particle sizes corresponding to cumulative volume distribution percentages of a material reaching 10%, 50%, and 90%, respectively, and can be determined using instruments and methods known in the art. For example, the particle size by volume can be conveniently determined using a laser particle size analyzer in accordance with GB/T 19077-2016 particle size distribution laser diffraction method. The test instrument may be a Mastersizer 3000 laser particle size analyzer from Malvern Instruments in UK.

In some embodiments, a tap density of the carbon material is 1. 0 g/cm³-1.5 g/cm³, and optionally 1.1 g/cm³-1.4 g/cm³. With the tap density of the carbon material falling within the foregoing range, the compacted density of the negative electrode plate can be increased, thereby increasing the energy density of the secondary battery; and it is also favorable to improve the transmission performance of active ions and electrons and to improve the cycling performance and kinetic performance of the secondary battery.

The tap density of the carbon material has a well-known meaning in the art, and can be determined using an instrument and a method well known in the art. For example, the tap density can be determined using a powder tap density tester in accordance with GB/T 5162-2006. The test instrument may be a Dandong Baxter BT-301.

In some embodiments, a gram capacity of the carbon material is 350 mAh/g-372 mAh/g, and optionally 353 mAh/g-371 mAh/g. With the gram capacity of the carbon material falling within the foregoing range, the energy density of the secondary battery can be increased.

The gram capacity of the carbon material has a well-known meaning in the art, and can be determined using an instrument and a method well known in the art. An exemplary test method is as follows: mixing a carbon material sample with a binder styrene-butadiene rubber (SBR), a thickener sodium carboxymethyl cellulose (CMC), and a conductive agent carbon black at a mass ratio of 96.2:1.8:1.2:0.8 in an appropriate amount of a solvent, deionized water, to prepare a homogeneous negative electrode slurry; evenly applying the negative electrode slurry on a surface of a negative electrode current collector copper foil; and drying the negative electrode current collector coated with the negative electrode slurry in an oven for later use; mixing ethylene carbonate (EC), ethyl methyl carbonate (EMC), and diethyl carbonate (DEC) at a volume ratio of 1:1:1 to prepare an organic solvent, and dissolving LiPF₆ in the foregoing organic solvent to prepare an electrolyte with a concentration of 1mol/L; and then assembling the foregoing products with a lithium metal sheet serving as the counter electrode and a polyethylene (PE) film serving as a separator into a CR2430 button cell in an argon gas-protected glove box. At 25°C, the above-prepared button cell is first discharged to 0.005 V at a constant current of 0.15 mA, and left standing for 5 min, and then discharged to 0.005 V at a constant current of 10 µA. Then, the first-cycle discharge capacity of the button cell is recorded. The above-prepared button cell is charged to 2.0 V at a constant current of 0.3 mA, and then the charge capacity of the button cell is recorded. The ratio of the charge capacity of the button cell to the mass of the carbon material sample is the gram capacity of the carbon material.

### Preparation method

A second aspect of the embodiments of this application provides a preparation method of carbon material, based on which the carbon material of the first aspect of the embodiments of this application can be prepared.

The preparation method of carbon material includes the following steps: step 1, providing a raw material having a plurality of pore structures; step 2, mixing the raw material with a filling material homogeneously at a predetermined ratio, and leaving the resulting product standing at a first temperature T₁ for a first time t₁ to obtain an intermediate; and step 3, leaving the resulting intermediate standing at a second temperature T₂ for a second time t₂ to obtain a carbon material, where the carbon material includes a pore structure, and in a thermogravimetric analysis test of the carbon material under air atmosphere, a weight loss rate of the carbon material at 35°C to 790°C is less than or equal to 60%.

In some embodiments, the raw material for preparing the carbon material includes natural graphite. Optionally, the natural graphite includes one or more of flake graphite, natural spherical graphite, and microcrystalline graphite, and more optionally, includes natural spherical graphite.

The "natural spherical graphite" is natural graphite having a spherical or spheroidal shape, and not all natural graphite particles are controlled to be ideally spherical. In some embodiments, natural spherical graphite with a required particle size and morphology can be obtained by preprocessing flake graphite, and optionally, the pretreatment includes processes such as crushing, classification, spheroidization, and purification.

In some embodiments, the raw material is in one or more of spherical and spheroidal morphologies.

In some embodiments, a particle size by volume Dᵥ50 of the raw material is 10.0 µm-20.0 µm, and optionally 12.0 µm-18.0 µm. With the particle size by volume of the raw material in the foregoing range, it is favorable to subsequent filling treatment.

In some embodiments, a percentage of element carbon in the raw material is greater than or equal to 90.0wt%, optionally greater than or equal to 95.0wt%, greater than or equal to 98.0wt%, or greater than or equal to 99.0wt%. This facilitates the prepared carbon material to have a lower heteroatom content, so as to reduce active ions consumed by heteroatoms, thereby contributing to the improvement of the initial coulombic efficiency and storage performance of the secondary battery.

In some embodiments, a particle size by volume Dᵥ50 of the filling material is less than or equal to 6 µm, and optionally 1 µm-6 µm, 1 µm-5 µm, 2 µm-5 µm, or 3 µm-5 µm. This is beneficial to filling the filling material into the pore structure of the raw material, and is also beneficial to improving the dispersion uniformity of the filling material and the raw material.

In some embodiments, a softening point temperature of the filling material is 80°C-150°C, optionally 90°C-145°C, 95°C-145°C, 100°C-145°C, 105°C-145°C, 90°C-140°C, 95°C-140°C, 100°C-140°C, 105°C-140°C, 105°C-135°C, 110°C-140°C, or 110°C-135°C_{∘}

The inventors have found in the course of research that with the softening point temperature of the filling material falling within the foregoing ranges, it is favorable to adjust the weight loss rate of the carbon material to be within a suitable range, and it is also favorable to adjust the pore sizes and/or the number of pores in the exterior zone and the interior zone of the carbon material to be within suitable ranges. In addition, the following cases can be effectively avoided. In a case that the softening point temperature of the filling material is too high, the filling material does not easily flow into the pore structure of the raw material. Therefore, the internal structural defects of the particles cannot be effectively modified, which increases the weight loss rate of the carbon material and lowers the initial weight loss temperature T₀ and/or the temperature Tₘₐₓ corresponding to the maximum weight loss rate of the carbon material. In addition, the electrolyte cannot be effectively prevented from seeping into the pore structures inside the prepared carbon material particles, which affects the initial coulombic efficiency, storage performance, and/or cycling performance of the secondary battery. In a case that the softening point temperature of the filling material is too low, the filling material contains a higher number of small molecules, which are easy to volatilize when heated. Therefore, although the filling material easily flows into the pore structure of the raw material, the small molecular substances in the filling material volatilize when thermal treatment is carried out in step 2 and/or step 3, resulting in the actual residual carbon not being able to fill the pore structure of the raw material and failing to achieve an effective filling effect, or resulting in the actual residual carbon having a larger number of pore structures, thereby resulting in a larger number of defects in the carbon material, an increase in the weight loss rate of the carbon material, a decrease in the initial weight loss temperature T₀ and/or the temperature Tₘₐₓ corresponding to the maximum weight loss rate of the carbon material. This cannot effectively reduce the active ions consumed by the formation of SEI or reduce the irreversible capacity loss of the secondary battery, and also affects the cycling performance and/or storage performance of the secondary battery.

In some embodiments, a coking value of the filling material is 15%-40%, and optionally 15%-35%. The inventors have found in the course of research that with the coking value of the filling material falling within the foregoing ranges, it is favorable to adjust the weight loss rate of the carbon material to be within a suitable range, and it is also favorable to adjust the pore sizes and/or the number of pores in the exterior zone and the interior zone of the carbon material to be within suitable ranges.

In this application, the coking value of the filling material has a well-known meaning in the art, and can be determined using an instrument and a method well known in the art. For example, the coking value can be determined in accordance with GB/T 8727-2008.

In some embodiments, the filling material includes one or more of coal asphalt, petroleum asphalt, polymer compounds, and resins, and optionally includes petroleum asphalt.

In some embodiments, a mass ratio of the filling material to the raw material is (10-35):100, and optionally (15-32):100, (18-30):100. This is favorable to adjust the weight loss rate of the carbon material to be within a suitable range, and also favorable to adjust the pore sizes and/or the number of pores in the exterior zone and the interior zone of the carbon material to be within suitable ranges. In addition, the following cases can be effectively avoided. In a case that the mass ratio of the filling material to the raw material is too small, the dispersion homogeneity between the filling material and the raw material may be poor. In this case, the filling material cannot effectively modify the internal structural defects of the particles, which increases the weight loss rate of the carbon material, and also decreases the initial weight loss temperature T₀ and/or the temperature Tₘₐₓ corresponding to maximum weight loss rate of the carbon material. Furthermore, the electrolyte cannot be effectively prevented from seeping into the pore structures inside the prepared carbon material particles, which affects the initial coulombic efficiency and storage performance of the secondary battery. In a case that the mass ratio of the filling material to the raw material is too large, it is easy to cause the internal pore structures of the raw material to be fully filled. In this case, the volume of the prepared carbon material changes greatly, the particles are more easily broken, the active ions consumed for formation of SEI increases, and the irreversible capacity loss of the secondary battery increases. When the mass ratio of filling material to raw material is too large, a large amount of filling material remains on the surface of the particles. In this case, the particles are more likely to be agglomerated, and in the subsequent depolymerization process, the particles will be fragmented, resulting in the formation of new defects and side reaction active sites and a decrease in the thermal stability of the carbon material, thereby increasing the weight loss rate of the carbon material, and reducing the initial weight loss temperature T₀ and/or the temperature Tₘₐₓ corresponding to the maximum weight loss rate of the carbon material.

With one or more parameters of type, softening point, coking value, and addition amount of the filling material adjusted in the foregoing range(s), it is favorable to adjust the weight loss rate of the carbon material to be within a suitable range, and it is also favorable to adjust the pore sizes and/or the number of pores in the exterior zone and the interior zone of the carbon material to be within suitable ranges; and in addition, after being heated and melted, the filling material has a low viscosity, maintains a good flowability, and is not easy to adhere to the particles of the raw material, which can reduce agglomeration of the particles in the subsequent preparation process, can reduce problems such as increased surface defects of the carbon material particles and increased surface side-reaction active sites caused by the need to increase the depolymerization process, and thus also can be favorable to further reduce the weight loss rate of the carbon material.

In some embodiments, in step 2, after the mixing the raw material with a filling material homogeneously at a predetermined ratio, the process of heating up to the first temperature T₁ is a staged heating process, and optionally includes a first heating process and a second heating process.

In some embodiments, the first heating process is heating up to 200°C-250°C and holding at that temperature for 1h-3h. The inventors have found in the course of research that with the holding time to be within the foregoing range, it is favorable to adjust the pore sizes and/or the number of pores in the exterior zone and the interior zone of the carbon material to be within suitable ranges. The following cases can be effectively avoided. In a case that the holding time is too short, the filling material does not easily flow into the pore structure of the raw material after being melted by heating. As a result, the surface defects and the bulk phase defects of the particles cannot be effectively modified, and the electrolyte cannot be effectively prevented from seeping into the pore structures inside the prepared carbon material particles, which affects the initial coulombic efficiency, storage performance, and/or cycling performance of the secondary battery. In a case that the holding time is too long, the filling material easily flows into the entire pore structure of the raw material, resulting in a larger change in volume of the carbon material produced during intercalation and deintercalation of the active ions, and the particles are more easily broken, which increases the active ions consumed by the formation of SEI, increases the irreversible capacity loss of the secondary battery, and also affects the cycling performance, storage performance, and/or kinetic performance the secondary battery.

In some embodiments, the second heating process is heating to the first temperature T₁ and holding at that temperature for the first time t₁.

In the staged heating process, the temperature is first raised to 200°C-250°C. Because the heating temperature is higher than the softening point temperature of the filling material, the filling material is melted and softened by heating in this temperature range. Maintaining the temperature for 1h-3h allows the filling material to flow into the pore structure of the raw material. Then the temperature is raised to the first temperature, and at this point, the filling material undergoes a carbonization reaction. In this way, the pore structure occupied by the filling material can be effectively filled.

In some embodiments, the first temperature T₁ is 700°C-1200°C, and optionally 750°C-1100°C, 800°C-1100°C, 850°C-1100°C, or 900°C-1100°C.

The inventors have found in the course of research that with the first temperature falling within the foregoing ranges, it is favorable to adjust the weight loss rate of the carbon material to be within a suitable range, and it is also favorable to adjust the pore sizes and/or the number of pores in the exterior zone and the interior zone of the carbon material to be within suitable ranges. The following cases can be effectively avoided. In a case that the first temperature is too low, the filling material may not be fully converted into the carbon material, and actual residue will continue to be decomposed into small molecules during the thermal treatment in the subsequent step 3, resulting in the actual residue having more pore structures and a failure in effectively modifying the internal structural defects of the particles. This increases the weight loss rate of the carbon material, and lowers the initial weight loss temperature T₀ and/or the temperature Tₘₐₓ corresponding to the maximum weight loss rate of the carbon material. In addition, the electrolyte cannot be effectively prevented from seeping into the pore structures inside the prepared carbon material particles, which affects the initial coulombic efficiency and storage performance of the secondary battery. In a case that the first temperature is too large, the energy consumed in the preparation process of the carbon material increases.

In some embodiments, the first time t₁ is 1h-5h. For example, the first time t₁ may be 1h, 1.5h, 2h, 2.5h, 3h, 3.5h, 4h, 4.5h, or 5h, or in a range defined by any two of these values. Optionally, the first time t₁ is 2h-4h.

The inventors have found in the course of research that with the first time falling within the foregoing ranges, it is favorable to adjust the weight loss rate of the carbon material to be within a suitable range, and it is also favorable to adjust the pore sizes and/or the number of pores in the exterior zone and the interior zone of the carbon material to be within suitable ranges. The following cases can be effectively avoided. In a case that the first time is too short, the filling material may not be fully converted into the carbon material, and actual residue carbon will continue to be decomposed into small molecules during the thermal treatment in the subsequent step 3, resulting in the actual residue carbon having more pore structures and a failure in effectively modifying the internal structural defects of the particles. This increases the weight loss rate of the carbon material, and lowers the initial weight loss temperature T₀ and/or the temperature Tₘₐₓ corresponding to the maximum weight loss rate of the carbon material. In addition, the electrolyte cannot be effectively prevented from seeping into the pore structures inside the prepared carbon material particles, which affects the initial coulombic efficiency and storage performance of the secondary battery. In a case that the first time is too long, the energy consumed in the preparation process of the carbon material increases.

In some embodiments, a heating rate of the first heating process may be 1°C/min-10°C/min, and optionally 1.5°C/min-8°C/min, or 1.5°C/min-5°C/min.

The inventors have found in the course of research that with the heating rate in the foregoing range, it is favorable to adjust the pore sizes and/or the number of pores in the exterior zone and the interior zone of the carbon material to be within suitable ranges. The following cases can be effectively avoided. In a case that the heating rate is too short, the filling material may be carbonized on the surface of the raw material particles, such that the filling material does not easily flow into the pore structure of the raw material. As a result, the surface defects and the bulk phase defects of the particles cannot be effectively modified, and the electrolyte cannot be effectively prevented from seeping into the pore structures inside the prepared carbon material particles, which affects the initial coulombic efficiency, storage performance, and cycling performance of the secondary battery. In a case that the heating rate is too long, the time required for preparation of the carbon material and the energy consumed by equipment will increase, and the filling material easily flows into the entire pore structure of the raw material, resulting in a larger change in volume of the carbon material during intercalation and deintercalation of the active ions and more easy breakage of the particles, which increases the active ions consumed by the formation of SEI, increases the irreversible capacity loss of the secondary battery, and also affects the storage performance, cycling performance, and kinetic performance.

In some embodiments, a heating rate of the second heating process is 2°C/min-10°C/min, and optionally 2.5°C/min-8°C/min.

In some embodiments, in step 2, the thermal treatment may be carried out in a vertical pelletizing kettle, a horizontal pelletizing kettle, a vertical reactor, a horizontal reactor, or a drum furnace.

In some embodiments, in step 2, the thermal treatment atmosphere may be a protective gas atmosphere. The protective gas may include one or more of nitrogen, argon, and helium.

In step 2, with one or more of the heating rate, the first temperature, the first time, the heating process, and the like adjusted in the foregoing range(s), it is favorable to adjust the weight loss rate, maximum weight loss rate, initial weight loss temperature T₀ and/or temperature Tₘₐₓ corresponding to the maximum weight loss rate of the carbon material to be within suitable range(s), and it is also favorable to adjust the pore sizes and/or the number of pores in the exterior zone and the interior zone of the carbon material to be within suitable ranges.

In some embodiments, the second temperature T₂ is 2000°C-2700°C, and optionally 2050°C-2600°C, 2100°C-2600°C, 2150°C-2600°C, 2200°C-2600°C, 2250°C-2600°C, 2100°C-2500°C, 2150°C-2500°C, 2200°C-2500°C, 2250°C-2500°C, 2100°C-2400°C, 2150°C-2400°C, or 2200°C-2400°C.

The inventors have found in the course of research that with the second temperature in the foregoing range, it is favorable for the carbon material to have fewer surface defects and bulk phase defects, which is conducive to reducing the weight loss rate of the carbon material. The following cases can be effectively avoided. In a case that the second temperature is too low, the prepared carbon material has more surface defects and/or bulk phase defects, which increases the weight loss rate of the carbon material, decreases the initial weight loss temperature T₀ and/or the temperature Tₘₐₓ corresponding to the maximum weight loss rate of the carbon material, increases the active ions consumed, and affects the initial coulombic efficiency and storage performance of the secondary battery. In a case that the second temperature is too high, both the crystallinity and graphitization of the prepared carbon material are high, which is not conducive to the rapid intercalation and deintercalation of active ions. In addition, a too-high second temperature will lead to the volume of the residual carbon in the filling zone to decrease, causing an increase in the total pore area in the exterior zone of the carbon material. As a result, the surface defects of the carbon material may increase, affecting the storage performance of the secondary battery. In addition, the energy consumption required for preparation of the carbon material will also increase.

In some embodiments, the second time t₂ is 1.5h-6h.For example, the second time t₁ may be 2h, 2.5h, 3h, 3.5h, 4h, 4.5h, 5h, 5.5h, or 6h, or in a range defined by any two of these values. Optionally, the second time t₂ is 2h-5h.

The inventors have found in the course of research that with the second time in the foregoing range, it is favorable for the carbon material to have fewer surface defects and bulk phase defects, which is conducive to reducing the weight loss rate of the carbon material. The following cases can be effectively avoided. In a case that the second time is too short, the prepared carbon material has more surface defects and/or bulk phase defects, which increases the weight loss rate of the carbon material, decreases the initial weight loss temperature T₀ and/or the temperature Tₘₐₓ corresponding to the maximum weight loss rate of the carbon material, increases the active ions consumed, and affects the initial coulombic efficiency and storage performance of the secondary battery. In a case that the second time is too long, the crystallinity and graphitization of the prepared carbon material are high, which is not conducive to the rapid intercalation and deintercalation of active ions. In addition, a too-long second time will lead to the volume of the residual carbon in the filling zone to decrease, causing an increase in the total pore area in the exterior zone of the carbon material. As a result, the surface defects of the carbon material may increase, affecting the storage performance of the secondary battery. In addition, the energy consumption required for preparation of the carbon material will also increase.

In some embodiments, in step 3, the thermal treatment may be carried out in an intermediate frequency furnace, a chamber graphitization furnace, an Acheson graphitization furnace, a continuous graphitization furnace, or an internal string graphitization furnace.

In some embodiments, in step 3, the continuous graphitization thermal treatment atmosphere in the intermediate frequency furnace may be a protective gas atmosphere. The protective gas may include one or more of nitrogen, argon, and helium.

With one or more of the second temperature and the second time adjusted in the foregoing range(s), it is favorable to adjust the weight loss rate, maximum weight loss rate, initial weight loss temperature T₀ and/or temperature Tₘₐₓ corresponding to the maximum weight loss rate of the carbon material to be within suitable range(s).

The preparation method of carbon material of this application is simple and safe, does not require a preset pressure or evacuation treatment, and can be executed without additional depolymerization process during thermal treatment. The carbon material prepared in this application has fewer surface defects and bulk phase defects, and the carbon material can combine higher gram capacity, higher initial coulombic efficiency, and smaller volume change, and can also enable the secondary battery to combine a high initial coulombic efficiency with good storage performance.

The preparation method of this application is inexpensive, highly practical, and suitable for large-scale production.

### Secondary battery

A third aspect of the embodiments of this application provides a secondary battery.

The secondary battery is not particularly limited to any type in this application. For example, the secondary battery may be a lithium-ion battery or the like. Typically, the secondary battery includes a positive electrode plate, a negative electrode plate, an electrolyte, and the like. During charge and discharge of the secondary battery, active ions intercalate and deintercalate back and forth between the positive electrode plate and the negative electrode plate, and the electrolyte conducts the active ions between the positive electrode plate and the negative electrode plate. The electrolyte is not particularly limited to any type in this application, and may be selected based on actual needs. For example, the electrolyte may be selected from at least one of a solid electrolyte and a liquid electrolyte (that is, an electrolyte solution). A secondary battery using a liquid electrolyte and some secondary batteries using a solid electrolyte may further include a separator, where the separator is provided between the positive electrode plate and the negative electrode plate for isolation.

### [Negative electrode plate]

In some embodiments, the negative electrode plate includes a negative electrode current collector and a negative electrode film layer provided on at least one surface of the negative electrode current collector. For example, the negative electrode current collector has two opposite surfaces in its thickness direction, and the negative electrode film layer is provided on either or both of the two opposite surfaces of the negative electrode current collector.

In some embodiments, the negative electrode film layer includes the carbon material according to the first aspect of the embodiments of this application or a carbon material prepared using the method according to the second aspect of the embodiments of this application. This enables the secondary battery to combine high initial coulombic efficiency and good storage performance.

In some embodiments, the negative electrode film layer may further include another negative electrode active material in addition to the carbon material. In some embodiments, the another negative electrode active material includes, but is not limited to, one or more of conventional natural graphite, artificial graphite, soft carbon, hard carbon, a silicon-based material, a tin-based material, and lithium titanate. The silicon-based material may include one or more of elemental silicon, a silicon-oxygen compound, a silicon-carbon compound, a silicon-nitrogen compound, and a silicon alloy. The tin-based material may include one or more of elemental tin, a tin oxide, and a tin alloy.

In some embodiments, the negative electrode film layer further optionally includes a negative electrode conductive agent. The negative electrode conductive agent is not specifically limited to any type in this application. For example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer further optionally includes a negative electrode binder. The negative electrode binder is not specifically limited to any type in this application. For example, the negative electrode binder may include one or more of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer further optionally includes another additive. For example, the another additive may include a thickener, for example, sodium carboxymethyl cellulose (CMC) and a PTC thermistor material.

In some embodiments, the negative electrode current collector may be a metal foil current collector or a composite current collector. In an example, the metal foil may be a copper foil. The composite current collector may include a polymer material matrix and a metal material layer formed on at least one surface of the polymer material matrix. In an example, the metal material may include one or more of copper, copper alloy, nickel, nickel alloy, titanium, titanium alloy, silver, and silver alloy. In an example, the polymer material matrix may include one or more of polypropylene (PP), polyethylene terephthalate (PET), polybutylene terephthalate (PBT), polystyrene (PS), and polyethylene (PE).

The negative electrode film layer is usually prepared by applying a negative electrode slurry onto the negative electrode current collector, followed by drying and cold-pressing. The negative electrode slurry is usually prepared by dispersing the negative electrode active material, the optional conductive agent, the optional binder, and the optional additive in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate described in this application further includes a conductive primer layer (for example, consisting of a conductive agent and a binder) provided on the surface of the negative electrode current collector and sandwiched between the negative electrode current collector and the negative electrode film layer. In some embodiments, the negative electrode plate described in this application further includes a protective layer covering the surface of the negative electrode film layer.

### [Positive electrode plate]

In some embodiments, the positive electrode plate includes a positive electrode current collector and a positive electrode film layer provided on at least one surface of the positive electrode current collector. For example, the positive electrode current collector has two opposite surfaces in its thickness direction, and the positive electrode film layer is provided on either or both of the two opposite surfaces of the positive electrode current collector.

The positive electrode current collector may be a metal foil current collector or a composite current collector. In an example, the metal foil may be an aluminum foil. The composite current collector may include a polymer material matrix and a metal material layer formed on at least one surface of the polymer material matrix. In an example, the metal material may include one or more of aluminum, aluminum alloy, nickel, nickel alloy, titanium, titanium alloy, silver, and silver alloy. In an example, the polymer material matrix may include one or more of polypropylene (PP), polyethylene terephthalate (PET), polybutylene terephthalate (PBT), polystyrene (PS), and polyethylene (PE).

The positive electrode film layer generally includes the positive electrode active material, an optional binder, and an optional conductive agent. The positive electrode film layer is usually prepared by applying a positive electrode slurry onto the positive electrode current collector, followed by drying and cold-pressing. The positive electrode slurry is typically formed by dispersing the positive electrode active material, the optional conductive agent, the optional binder, and any other components into a solvent and stirring them until the mixture is uniform. The solvent may be but is not limited to N-methylpyrrolidone (NMP). In an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In an example, the conductive agent for the positive electrode film layer may include one or more of superconducting carbon, conductive graphite, acetylene black, carbon black, Ketjen black, carbon dots, carbon nanotubes, graphene, and carbon nanofiber.

The positive electrode active material may be a positive electrode active material for secondary batteries well-known in the art.

When the secondary battery in this application is a lithium-ion battery, the positive electrode active material may include, but is not limited to, one or more of lithium-containing transition metal oxide, lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further increase the energy density of the secondary battery, the positive electrode active material for the lithium-ion battery may include one or more of a lithium transition metal oxide of general formula LiₐNi_{b}Co_{c}M_{d}OₑA_{f} and modified compounds thereof, where 0.8≤a≤1.2, 0.5≤b<1, 0<c<1, 0<d<1, 1≤e≤2, 0≤f≤1, M is one or more selected from Mn, Al, Zr, Zn, Cu, Cr, Mg, Fe, V, Ti, and B, and A is one or more selected from N, F, S, and Cl.

In some embodiments, the positive electrode active material for lithium-ion batteries may be one or more selected from LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

In this application, the modified compound of each of the foregoing positive electrode active materials may be a modified positive electrode active material produced through doping and/or surface coating.

### [Electrolyte]

In some embodiments, the electrolyte is a liquid electrolyte, where the liquid electrolyte includes an electrolytic salt and a solvent.

The electrolytic salt is not specifically limited to any type, and may be selected based on actual needs.

When the secondary battery in this application is a lithium-ion battery, in an example, the electrolytic salt may include one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

The solvent is not specifically limited to any type, and may be selected based on actual needs. In some embodiments, in an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methanesulfonate (EMS), and ethylsulfonyl ethane (ESE).

In some embodiments, the liquid electrolyte further optionally includes an additive. For example, the additive may include a negative electrode film-forming additive, or may include a positive electrode film-forming additive, or may include an additive capable of improving some performance of the secondary battery, for example, an additive for improving anti-overcharge performance of the secondary battery, an additive for improving high-temperature performance of the secondary battery, or an additive for improving low-temperature power performance of the secondary battery.

### [Separator]

The separator is not limited to any particular type in this application, and may be any well-known porous separator with good chemical stability and mechanical stability.

In some embodiments, a material of the separator may include one or more of glass fiber, nonwoven fabric, polyethylene, polypropylene, and polyvinylidene fluoride. The separator may be a single-layer thin film or a multi-layer composite thin film. When the separator is a multi-layer composite thin film, each layer is made of the same or different materials.

In some embodiments, the positive electrode plate, the separator, and the negative electrode plate may be made into an electrode assembly through winding or lamination.

In some embodiments, the secondary battery may include an outer package. The outer package may be used for packaging the foregoing electrode assembly and electrolyte.

In some embodiments, the outer package may be a hard shell, for example, a hard plastic shell, an aluminum shell, or a steel shell. The outer package may alternatively be a pouch cell, for example, a soft bag. A material of the soft pack may be plastic, for example, one or more of polypropylene (PP), polybutylene terephthalate (PBT), and polybutylene succinate (PBS).

This application does not impose any special limitations on a shape of the secondary battery, and the secondary battery may be cylindrical, rectangular, or of any other shapes. FIG. 2 shows a rectangular secondary battery 5 as an example.

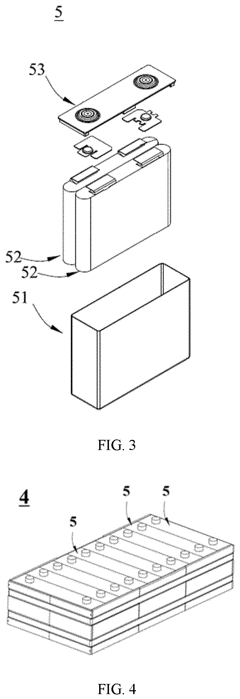

In some embodiments, as shown in FIG. 3, the outer package may include a housing 51 and a cover plate 53. The housing 51 may include a bottom plate and a side plate connected to the bottom plate, where the bottom plate and the side plate enclose an accommodating cavity. The housing 51 has an opening in communication with the accommodating cavity, and the cover plate 53 is configured to cover the opening so as to close the accommodating cavity. The positive electrode plate, the negative electrode plate, and the separator may be made into an electrode assembly 52 through winding or lamination. The electrode assembly 52 is encapsulated into the accommodating cavity. The electrolyte infiltrates the electrode assembly 52. The secondary battery 5 may include one or more electrode assemblies 52 whose quantity is adjustable as required.

The preparation method of secondary battery of this application is well known. In some embodiments, the positive electrode plate, the separator, the negative electrode plate, and the electrolyte may be assembled to produce a secondary battery. For example, the positive electrode plate, the separator, and the negative electrode plate can be made into an electrode assembly through a winding process or a lamination process. Then, the electrode assembly is placed into an outer package which is filled with electrolyte after drying, followed by processes including vacuum packaging, standing, formation, and shaping, to obtain the secondary battery.

In some embodiments of this application, the secondary battery according to this application may be assembled into a battery module. The battery module may include a plurality of secondary batteries whose specific quantity is adjustable based on application and capacity of the battery module.

FIG. 4 is a schematic diagram of a battery module 4 as an example. As shown in FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

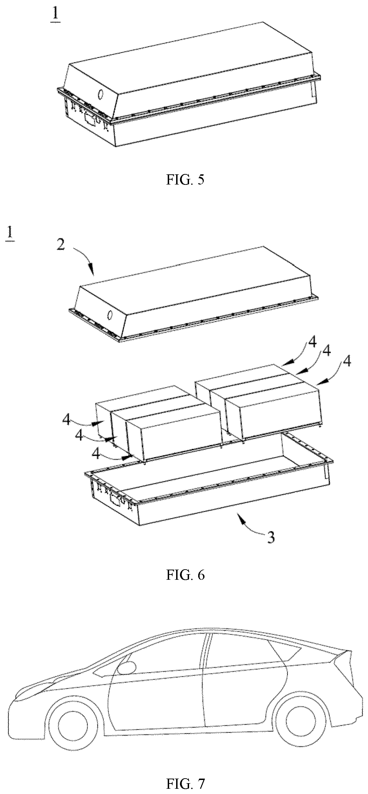

FIG. 5 and FIG. 6 are schematic diagrams of a battery pack 1 as an example. As shown in FIG. 5 and FIG. 6, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### Electric apparatus

In addition, this application further provides an electric apparatus. The electric apparatus includes at least one of the secondary battery, the battery module, or the battery pack in this application. The secondary battery, the battery module, or the battery pack may be used as a power source for the electric apparatus, or an energy storage unit of the electric apparatus. The electric apparatus may be, but is not limited to, a mobile device (for example, a mobile phone, tablet, or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the apparatus.

FIG. 7 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. The electric apparatus is usually required to be light and thin, and a secondary battery may be used as a power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

### (1) Preparation of carbon material

Step 1: 100-mesh flake graphite was mechanically crushed, graded, spheroidized, and purified to prepare natural spherical graphite with a particle size by volume Dᵥ50 of 15 µm and a percentage of element carbon of 99.0%.

Step 2: The prepared natural spherical graphite and petroleum asphalt (with a softening point temperature of 114°C, a particle size by volume Dᵥ50 of 4.5 µm, and a coking value of 29%) were mixed at a mass ratio of 100:25 in the VC mixer for 30 min; the mixed material was placed in a drum furnace; and the drum furnace was heated at a heating rate of 5°C/min to 225°C and held at this temperature for 1.5h (the first heating process). After that, the mixed material was heated to 1000°C at a heating rate of 5°C/min and held at this temperature for 3h (the second heating process), and then cooled to room temperature to prepare intermediates.

Step 3: The prepared intermediates were placed in an Acheson graphitization furnace, and the furnace was heated to 2380°C and held at this temperature for 5h. After the completion, the carbon material was demagnetized and sieved.

### (2) Preparation of button cell (half cell)

The above-prepared carbon material, a binder styrene-butadiene rubber (SBR), a thickener sodium carboxymethyl cellulose (CMC), and a conductive agent carbon black were mixed at a mass ratio of 96.2:1.8:1.2:0.8 and fully stirred in an appropriate amount of solvent deionized water to prepare a uniform negative electrode slurry; and the negative electrode slurry was evenly applied on a surface of the negative electrode current collector copper foil, and the negative electrode current collector coated with the negative electrode slurry was placed in an oven for drying for later use. Ethylene carbonate (EC), ethyl methyl carbonate (EMC), and diethyl carbonate (DEC) were mixed at a volume ratio of 1:1:1 to prepare an organic solvent, and then LiPF₆ was dissolved in the organic solvent to prepare an electrolyte with a concentration of 1 mol/L. Next, a CR2430 button cell was assembled in an argon gas protected glove box with a lithium metal sheet as a counter electrode and a polyethylene (PE) film as a separator.

### (3) Preparation of secondary battery (full cell)

The above-prepared carbon material, a conductive agent carbon black (Super P), a binder styrene-butadiene rubber, and a thickener sodium carboxymethyl cellulose were mixed at a weight ratio of 96:1:1:2 and fully stirred in an appropriate amount of solvent deionized water to prepare a negative electrode slurry. The negative electrode slurry was applied onto two surfaces of a negative electrode current collector copper foil, followed by drying and cold pressing, to prepare a negative electrode plate.

LiFePO₄, conductive carbon black, and polyvinylidene fluoride were mixed at a weight ratio of 96:2.5:1.5, and an appropriate amount of solvent NMP was added into the mixed solution for fully stirring to prepare a positive electrode slurry. The positive electrode slurry was applied onto two surfaces of a positive electrode current collector aluminum foil, followed by drying and cold pressing, to prepare a positive electrode plate.

With a polypropylene film with a thickness of 12 µm used as a separator, the above-prepared positive electrode plate and negative electrode plate were sequentially stacked such that the separator was located between the positive electrode plate and the negative electrode plate to provide separation. Then the resulting stack was wound to produce an electrode assembly. The electrode assembly was placed into an outer package and dried. Then the same electrolyte used to prepare button cells above was injected, and processes such as vacuum packaging, standing, formation, and capacity grading were carried out to prepare a secondary battery.

### Comparative Example 1

The preparation methods of half cell and full cell were similar to those of Example 1, except for the preparation process of carbon material.

100-mesh flake graphite was mechanically crushed, graded, spheroidized, and purified to prepare natural spherical graphite with a particle size by volume Dᵥ50 of 15 µm and a percentage of element carbon of 99.0%.

### Comparative Example 2

The preparation methods of half cell and full cell were similar to those of Example 1, except for the preparation process of carbon material.

100-mesh flake graphite was mechanically crushed, graded, spheroidized, and purified to prepare natural spherical graphite with a particle size by volume Dᵥ50 of 15 µm and a percentage of element carbon of 99.0%.

The prepared natural spherical graphite and petroleum asphalt (with a softening point temperature of 114°C, a particle size by volume Dᵥ50 of 4.5 µm, and a coking value of 29%) were mixed at a mass ratio of 100:25 in the VC mixer for 30 min; the mixed material was then graphitized at 3200°C for 10h, and then cooled to room temperature to prepare a carbon material.

### Comparative Example 3

The preparation methods of half cell and full cell were similar to thoses of Example 1, except for the preparation process of carbon material.

100-mesh flake graphite was mechanically crushed, graded, spheroidized, and purified to prepare natural spherical graphite with a particle size by volume Dᵥ50 of 15 µm and a percentage of element carbon of 99.0%.

The prepared natural spherical graphite and petroleum asphalt (with a softening point temperature of 114°C, a particle size by volume Dᵥ50 of 4.5 µm, and a coking value of 29%) were mixed at a mass ratio of 100:25 in the VC mixer for 30 min; the mixed material was then carbonized at 1200°C for 2h, and then cooled to room temperature to prepare a carbon material.

### Comparative Example 4

The preparation methods of half cell and full cell were similar to those of Example 1, except for the preparation process of carbon material.

100-mesh flake graphite was mechanically crushed, graded, spheroidized, and purified to prepare natural spherical graphite with a particle size by volume Dᵥ50 of 15 µm and a percentage of element carbon of 99.0%.

The prepared natural spherical graphite and petroleum asphalt (with a softening point temperature of 114°C, a particle size by volume Dᵥ50 of 4.5 µm, and a coking value of 29%) were mixed in a VC mixer for 30 min. Afterwards, the mixed material was put into a reactor. The reactor was heated gradually at a heating rate of 2°C/min; while heating, the reactor was kept in the state of uniform stirring, and then heated to 190°C; the reactor was pumped up to a pressure of -0.1 Mpa and then held at this temperature for 2h; after the heat preservation was completed, the reactor was heated to 650°C and held at this temperature for 2h; and after that, the reactor was cooled down to about 160°C, and petroleum asphalt was slowly added into the reactor. A mass ratio of the amount of petroleum asphalt added this time to the amount of the previous petroleum asphalt added was 1:1. Next, the reactor was again heated to 190°C, and the reactor was pumped to a pressure of -0.1 Mpa, and then held at this temperature for 2h. After the heat preservation was completed, the reactor was heated to 650°C and held at this temperature for 2h. The temperature was then cooled down through condensation cooling. Finally, the material treated by the foregoing process was thermal-treated at 1200°C for 2h, and the thermal-treated sample was crushed and sieved to prepare a carbon material with no pores inside.

### Examples 2 to 23

The preparation methods of half cell and full cell were similar to those of Example 1, except that the preparation process parameters of the carbon material were adjusted. See Table 1 for details.

### Performance test

### (1) Thermogravimetric analysis test of carbon material

In accordance with JY/T 014-1996, a certain amount of carbon material was weighed and placed in a flat-bottomed crucible, the flat-bottomed crucible was shaken such that the carbon material was even, the flat-bottomed crucible was opened, the purge gas was air, and the thermogravimetric analysis test was carried out with an airflow rate of 60 mL/min and a heating rate of 5°C/min at a temperature range of 35°C-950°C, to obtain a thermogravimetric (TG) curve and a differential thermogravimetric (DTG) curve of the carbon material. Test instrument may be NETZSCH STA 449F3 synchronous thermal analyzer from NETZSCH Instruments, Germany.

The initial weight loss temperature T₀ of the carbon material is a temperature corresponding to the intersection point of the tangent line at the front level of the thermogravimetric curve step and the tangent line at the maximum weight loss rate of the carbon material.

The temperature Tₘₐₓ corresponding to the maximum weight loss rate of the carbon material is the peak temperature of the thermogravimetric differential curve of the carbon material.

### (2) Total pore area test of exterior and interior zones of carbon material

The binder for sample preparation was mixed with carbon material powder, and the mixed product was applied onto copper foil for drying at 60°C for 30 min for later use. The resulting product was cut into a sample of a size of 6 mm × 6 mm and the sample was pasted onto the sample stage of the CP argon ion cross-section polisher; and the sample was cut using a plasma beam to get a cross-section of the carbon material, where the cross-section of the carbon material passes through the center of the carbon material particle. The test instrument might be an argon ion cross-section polisher model IB-09010 CP from JEOL in Japan.

The cross-section of the carbon material was scanned using a scanning electron microscope. For the test, reference may be made to JY/T010-1996. The test instrument might be a Sigma 300 scanning electron microscope from ZEISS in Germany.

A zone extending from the surface of the carbon material particle to the interior of the particle by a distance of 0.25 L was denoted as the exterior zone, a zone inside the exterior zone was denoted as the interior zone, and L denotes a length of the short axis of the carbon material particle. An image processing software was used to calculate a total pore area S₁ of the exterior zone of the carbon material and a total pore area S₂ of the interior zone of the carbon material. The image processing software might be AVIZO.

### (3) Initial coulombic efficiency test of carbon material

At 25°C, the above-prepared button cell was first discharged to 0.005 V at a constant current of 0.15 mA, and left standing for 5 minutes, and then discharged to 0.005 V at a constant current of 10 µA. At this point, the first-cycle discharge capacity of the button cell was recorded. The above-prepared button cell was charged to 2.0 V at a constant current of 0.3 mA. At this point, the first-cycle charge capacity of the button cell was recorded. The initial coulombic efficiency (%) of carbon material = first-cycle charge capacity of button cell/first-cycle discharge capacity of button cell × 100%.

### (4) Storage performance test of secondary battery

The above-prepared secondary battery was charged to the upper limit cut-off voltage (corresponding to 100% SOC) at a constant current of 1C at 25°C, then charged at a constant voltage to a current of 0.05C, and left standing for 5 min; and then the secondary battery was discharged the to the lower limit cut-off voltage (corresponding to 0% SOC) at a constant current of 1C. The discharge capacity at this point was recorded, and it was the discharge capacity before storage.

The above-prepared secondary battery was charged to the upper limit cut-off voltage (corresponding to 100% SOC) at a constant current of 1C at 25°C, and then charged at a constant voltage to a current of 0.05C. Afterwards, the secondary battery was stored in a 60°C constant temperature box until the discharge capacity of the secondary battery after storage attenuated to 90% of the discharge capacity before storage. The test was stopped and the storage days of the secondary battery were recorded.

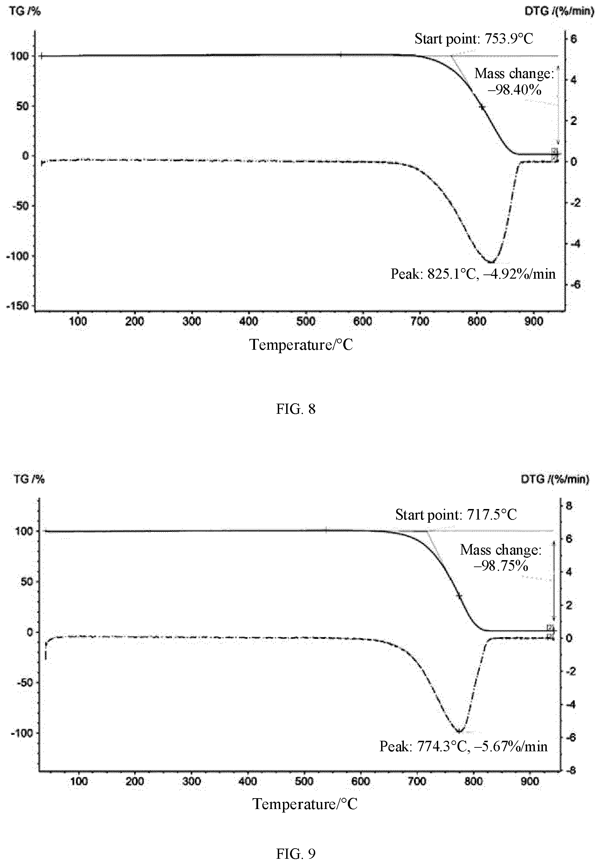

FIG. 8 is a thermogravimetric curve and a thermogravimetric differential curve of the carbon material prepared in Example 2. FIG. 9 is a thermogravimetric curve and a thermogravimetric differential curve of the carbon material prepared in Comparative Example 2. It can be seen from the figures that the carbon material prepared in this application has a low weight loss rate, low maximum weight loss rate, high temperature Tₘₐₓ corresponding to the maximum weight loss rate, and high initial weight loss temperature T₀ at 35°C to 790°C.

In combination with the test results in Table 2, it can be seen that when the carbon material has a weight loss rate of less than or equal to 60% at 35°C to 790°C, the battery can combine high initial coulombic efficiency and good storage performance. In addition, further, when the weight loss rate of the carbon material at 35°C to 790°C is 5%-55%, and optionally 15%-45%, the battery can have higher initial coulombic efficiency and better storage performance.

In combination with the test results in Table 2, it can also be seen that when Tₘₐₓ≥790°C, optionally 790°C-910°C, and more optionally 800°C-850°C, the battery can have a higher initial coulombic efficiency and better storage performance.

In combination with the test results in Table 2, it can also be seen that when T₀≥725°C, optionally 725°C-900°C, and more optionally 728°C-785°C, the battery can have a higher initial coulombic efficiency and better storage performance.

The weight loss rate of the carbon materials prepared in Comparative Examples 1 to 4 are all greater than 60% at 35°C to 790°C, and none of these carbon materials can enable the battery to combine high initial coulombic efficiency and good storage performance.

The carbon materials prepared in Comparative Examples 2 and 3 are prepared by applying a carbon coating layer on the surface of natural spherical graphite, but the carbon layer only exists on the surface of natural spherical graphite, which fails to realize the effective filling effect and cannot effectively modify the internal defects of natural spherical graphite; and the carbon layer also does not effectively prevent the electrolyte from seeping into the pore structure of particles, resulting in limited improvement of the initial coulombic efficiency and storage performance of the battery.

In the preparation of the carbon material in Comparative Example 4, the filling material was filled into all the pore structures of the natural spherical graphite particles by vacuuming, but the actual residual carbon in the filling zone was soft carbon, which did not make the prepared carbon material have low reactivity of the battery, and would lead to limited improvements in the initial coulombic efficiency and storage performance of the battery. In addition, in this case, the carbon material produces still larger volume changes during intercalation and deintercalation of the active ions, and the particles are more susceptible to fragmentation, which consequently increases the side reactions that occur and the active ions consumed.

In combination with the test results in Table 2, it can also be seen that the carbon material further improves the initial coulombic efficiency and storage performance of the battery when the carbon material further satisfies S₂>S₁, and optionally 1.5 ≤S₂/S₁≤400, or 2≤S₂/S₁≤200. In this way, the carbon material particles may further have the following characteristics: a high number of pores and/or a large pore size in the interior zone and a low number of pores and/or a small pore size in the exterior zone. The pore structure in the interior zone of the carbon material reserves the required expansion space for volume changes of the carbon material particles, which reduces the risk of fragmentation of the carbon material particles producing new interfaces, thereby reducing the side reactions that occur, and reducing the irreversible capacity loss of the secondary battery; and the low number of pores and/or the small pore size in the exterior zone of the carbon material allow the carbon material particles to have a more stable structure and to avoid the electrolyte from seeping into the internal pore structures of the carbon material particles as much as possible, so as to reduce the side reactions that occur and reduce the active ions consumed for formation of SEI inside the particles. As a result, the carbon material can further improve the initial coulombic efficiency and storage performance of the battery.

The specific surface area, particle size by volume, particle size distribution, degree of graphitization, tap density, and other parameters of the carbon materials prepared in Examples 1 to 23 are all within the ranges described in the specification of this application.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Table 1**

| No. | Raw material | | Filling material | | | Mass ratio of raw material to filling material | Step2 | | | | | | Step3 | |
|---|---|---|---|---|---|---|---|---|---|---|---|---|---|---|
| | Dᵥ50 (µm) | Percentage of element carbon | Softening point temperature (°C) | Dᵥ50 (µm) | Coking value | | First heating process | | | Second heating process | | | Holding temperature (°C) | Holding time (h) |
| | | | | | | | Heating rate (°C/min) | Holding temperature (°C) | Holding time (h) | Heating rate (°C/min) | Holding temperature (°C) | Holding time (h) | | |
| Example 1 | 15 | 99.0% | 114 | 4.5 | 29% | 100:25 | 5 | 225 | 1.5 | 5 | 1000 | 3 | 2380 | 5 |
| Example 2 | 15 | 99.0% | 114 | 4.5 | 29% | 100:20 | 5 | 225 | 1.5 | 5 | 1000 | 3 | 2380 | 5 |
| Example 3 | 15 | 99.0% | 114 | 4.5 | 29% | 100:15 | 5 | 225 | 1.5 | 5 | 1000 | 3 | 2380 | 5 |
| Example 4 | 15 | 99.0% | 114 | 4.5 | 29% | 100:30 | 5 | 225 | 1.5 | 5 | 1000 | 3 | 2380 | 5 |
| Example 5 | 15 | 99.0% | 114 | 4.5 | 29% | 100:35 | 5 | 225 | 1.5 | 5 | 1000 | 3 | 2380 | 5 |
| Example 6 | 15 | 99.0% | 114 | 4.5 | 29% | 100:10 | 5 | 225 | 1.5 | 5 | 1000 | 3 | 2380 | 5 |
| Example 7 | 15 | 99.0% | 80 | 4.5 | 15% | 100:25 | 5 | 225 | 1.5 | 5 | 1000 | 3 | 2380 | 5 |
| Example 8 | 15 | 99.0% | 90 | 4.5 | 16% | 100:25 | 5 | 225 | 1.5 | 5 | 1000 | 3 | 2380 | 5 |
| Example 9 | 15 | 99.0% | 105 | 4.5 | 26% | 100:25 | 5 | 225 | 1.5 | 5 | 1000 | 3 | 2380 | 5 |
| Example 10 | 15 | 99.0% | 130 | 4.5 | 32% | 100:25 | 5 | 225 | 1.5 | 5 | 1000 | 3 | 2380 | 5 |
| Example 11 | 15 | 99.0% | 148 | 4.5 | 35% | 100:25 | 5 | 225 | 1.5 | 5 | 1000 | 3 | 2380 | 5 |
| Example 12 | 15 | 99.0% | 200 | 4.5 | 40% | 100:25 | 5 | 225 | 1.5 | 5 | 1000 | 3 | 2380 | 5 |
| Example 13 | 15 | 99.0% | 114 | 4.5 | 29% | 100:25 | 5 | 225 | 1.5 | 5 | 600 | 3 | 2380 | 5 |
| Example 14 | 15 | 99.0% | 114 | 4.5 | 29% | 100:25 | 5 | 225 | 1.5 | 5 | 700 | 3 | 2380 | 5 |
| Example 15 | 15 | 99.0% | 114 | 4.5 | 29% | 100:25 | 5 | 225 | 1.5 | 5 | 800 | 3 | 2380 | 5 |
| Example 16 | 15 | 99.0% | 114 | 4.5 | 29% | 100:25 | 5 | 225 | 1.5 | 5 | 900 | 3 | 2380 | 5 |
| Example 17 | 15 | 99.0% | 114 | 4.5 | 29% | 100:25 | 5 | 225 | 1.5 | 5 | 1100 | 3 | 2380 | 5 |
| Example 18 | 15 | 99.0% | 114 | 4.5 | 29% | 100:25 | 5 | 225 | 1.5 | 5 | 1200 | 3 | 2380 | 5 |
| Example 19 | 15 | 99.0% | 114 | 4.5 | 29% | 100:25 | 5 | 225 | 1.5 | 5 | 1000 | 3 | 1800 | 5 |
| Example 20 | 15 | 99.0% | 114 | 4.5 | 29% | 100:25 | 5 | 225 | 1.5 | 5 | 1000 | 3 | 2000 | 5 |
| Example 21 | 15 | 99.0% | 114 | 4.5 | 29% | 100:25 | 5 | 225 | 1.5 | 5 | 1000 | 3 | 2300 | 5 |
| Example 22 | 15 | 99.0% | 114 | 4.5 | 29% | 100:25 | 5 | 225 | 1.5 | 5 | 1000 | 3 | 2500 | 5 |
| Example 23 | 15 | 99.0% | 114 | 4.5 | 29% | 100:25 | 5 | 225 | 1.5 | 5 | 1000 | 3 | 2700 | 5 |

**Table 2**

| No. | Performance of carbon material | | | | | | | Battery performance | |
|---|---|---|---|---|---|---|---|---|---|
| | Weight loss rate in temperature range of 35°C to 790°C | Maximum weight loss rate (%/min) | T₀ (°C) | Tₘₐₓ (°C) | S₁ (µm²) | S₂ (µm²) | S₂/S₁ | Initial coulombic efficiency | Storage days |
| Comparative Example 1 | 89.0% | 8.6 | 650.2 | 697.2 | 14.51 | 9.63 | 0.66 | 87.70% | 101 |
| Comparative Example 2 | 75.0% | 5.7 | 717.5 | 774.3 | 13.25 | 9.39 | 0.71 | 91.20% | 135 |
| Comparative Example 3 | 83.2% | 7.8 | 675.0 | 718.0 | 12.87 | 9.35 | 0.73 | 90.70% | 110 |
| Comparative Example 4 | 82.0% | 7.4 | 683.4 | 730.4 | 0.05 | 0.45 | 0.90 | 90.80% | 115 |
| Example 1 | 32.0% | 2.4 | 770.4 | 842.4 | 0.16 | 7.25 | 45.31 | 94.80% | 205 |
| Example 2 | 35.2% | 4.9 | 753.9 | 825.1 | 0.80 | 7.49 | 9.36 | 94.70% | 190 |
| Example 3 | 50.0% | 5.1 | 740.2 | 813.2 | 1.50 | 7.85 | 5.23 | 94.50% | 180 |
| Example 4 | 45.0% | 3.8 | 760.4 | 837.4 | 0.09 | 6.29 | 69.89 | 94.50% | 205 |
| Example 5 | 56.0% | 5.6 | 728.0 | 795.2 | 0.05 | 5.39 | 107.80 | 92.20% | 170 |
| Example 6 | 59.0% | 5.8 | 725.1 | 790.1 | 5.46 | 7.95 | 1.46 | 91.90% | 168 |
| Example 7 | 54.7% | 5.3 | 755.3 | 828.3 | 1.65 | 7.79 | 4.72 | 92.70% | 171 |
| Example 8 | 50.2% | 4.5 | 760.0 | 835.0 | 0.58 | 7.44 | 12.83 | 93.90% | 182 |
| Example 9 | 40.5% | 3.1 | 765.2 | 841.2 | 0.24 | 7.28 | 30.33 | 94.60% | 187 |
| Example 10 | 41.2% | 3.4 | 764.3 | 836.3 | 0.39 | 8.19 | 21.00 | 94.40% | 190 |
| Example 11 | 51.2% | 4.3 | 761.5 | 836.5 | 0.69 | 9.08 | 13.16 | 94.20% | 182 |
| Example 12 | 53.9% | 5.2 | 753.2 | 826.2 | 1.89 | 9.34 | 4.94 | 92.50% | 172 |
| Example 13 | 53.2% | 5.2 | 755.2 | 831.2 | 1.33 | 7.89 | 5.93 | 93.10% | 177 |
| Example 14 | 49.2% | 4.3 | 759.4 | 832.4 | 0.67 | 7.68 | 11.46 | 93.80% | 189 |
| Example 15 | 45.6% | 3.3 | 763.2 | 838.2 | 0.33 | 7.38 | 22.36 | 94.30% | 190 |
| Example 16 | 39.8% | 2.8 | 766.7 | 841.9 | 0.26 | 7.31 | 28.12 | 94.70% | 195 |
| Example 17 | 31.8% | 2.3 | 770.6 | 843.6 | 0.08 | 7.19 | 89.88 | 94.70% | 205 |
| Example 18 | 31.5% | 2.2 | 771.2 | 844.2 | 0.07 | 7.15 | 102.14 | 94.50% | 210 |
| Example 19 | 56.0% | 5.7 | 725.2 | 797.2 | 0.39 | 7.25 | 18.59 | 93.90% | 175 |
| Example 20 | 47.7% | 3.4 | 760.9 | 834.9 | 0.26 | 7.21 | 27.73 | 94.30% | 190 |
| Example 21 | 40.2% | 2.6 | 765.4 | 837.4 | 0.20 | 7.19 | 35.95 | 94.70% | 195 |
| Example 22 | 33.5% | 2.4 | 768.3 | 841.3 | 0.19 | 7.25 | 38.16 | 94.70% | 195 |
| Example 23 | 34.6% | 2.4 | 767.2 | 840.5 | 0.22 | 7.25 | 32.95 | 94.60% | 190 |

## Claims

1. A carbon material, wherein the carbon material comprises a pore structure, and in a thermogravimetric analysis test of the carbon material under air atmosphere, a weight loss rate of the carbon material at 35°C to 790°C is less than or equal to 60%.

2. The carbon material according to claim 1, wherein the weight loss rate of the carbon material at 35°C to 790°C is 5%-55%, and optionally 15%-45%.

3. The carbon material according to claim 1 or 2, wherein in the thermogravimetric analysis test of the carbon material under air atmosphere, a maximum weight loss rate of the carbon material is less than or equal to 5.5%/min, and optionally 0.5%/min-5%/min.

4. The carbon material according to any one of claims 1 to 3, wherein in the thermogravimetric analysis test of the carbon material under air atmosphere, a temperature corresponding to the maximum weight loss rate of the carbon material is denoted as Tₘₐₓ, wherein Tₘₐₓ is 790°C-910°C, and optionally 800°C-850°C.

5. The carbon material according to any one of claims 1 to 4, wherein in the thermogravimetric analysis test of the carbon material under air atmosphere, an initial weight loss temperature of the carbon material is denoted as T₀, wherein T₀ is 725°C-900°C, and optionally 728°C-785°C.

6. The carbon material according to any one of claims 1 to 5, wherein the carbon material comprises more than one pore structure with a pore area greater than or equal to 0.1 µm², and optionally comprises more than one pore structure with a pore area of 0.12 µm²-1.5 µm².

7. The carbon material according to any one of claims 1 to 6, wherein the carbon material comprises an exterior zone and an interior zone located inside the exterior zone, wherein the exterior zone is a zone extending from the surface of the carbon material particle to the interior of the particle by a distance of 0.25 L, L refers to a short-axis length of the carbon material particle, a total pore area of the exterior zone is denoted as S₁, a total pore area of the interior zone is denoted as S₂, and S₂>S₁, optionally 1.5≤S₂/S₁≤400, and 2≤S₂/S₁≤200.

8. The carbon material according to claim 7, wherein
0.01 µm²≤S₁≤5.5 µm², and optionally, 0.06 µm²≤S₁≤4.5 µm²; and/or
2.5 µm²≤S₂≤25.0 µm², and optionally, 4.0 µm²≤S₂≤15.0 µm²; and/or
L≥7 µm, and optionally, 7 µm≤L≤18 µm.

9. The carbon material according to claim 7 or 8, wherein
an area of the pore structure in the exterior zone of the carbon material is less than 0.2 µm², and optionally less than or equal to 0.12 µm²; and/or
the interior zone of the carbon material comprises more than one pore structure with an area greater than or equal to 0.12 µm², and optionally comprises more than one pore structure with an area of 0.12 µm²-2.5 µm².

10. The carbon material according to any one of claims 7 to 9, wherein an interlayer spacing in the exterior zone of the carbon material is denoted as d₁, an interlayer spacing in the interior zone of the carbon material is denoted as d₂, and the carbon material satisfies d₁≥ d₂; and
optionally, d₁>d₂.

11. The carbon material according to claim 10, wherein
d₁ is 0.33565 nm-0.33620 nm; and/or
d₂ is 0.33557 nm-0.33589 nm.

12. The carbon material according to any one of claims 1 to 11, wherein the carbon material satisfies at least one of the following:
(1) a specific surface area of the carbon material is 0.7 m²/g-1.6 m²/g, and optionally 0.8 m²/g-1.4 m²/g;
(2) a particle size by volume Dᵥ50 of the carbon material is 10.0 µm-20.0 µm, and optionally 12.0 µm-18.0 µm;
(3) a particle size by volume Dᵥ10 of the carbon material is 4.0 µm-13.0 µm, and optionally 6.0 µm-11.0 µm;
(4) a particle size by volume Dᵥ90 of the carbon material is 25.0 µm-35.0 µm, and optionally 27.0 µm-32.0 µm;
(5) a particle size distribution (Dᵥ90-Dᵥ10)/Dᵥ50 of the carbon material is 0.90-1.10, and optionally 0.95-1.05; and
(6) the carbon material is in one or more of block-shaped, spherical, and spheroidal morphologies.

13. The carbon material according to any one of claims 1 to 12, wherein the carbon material satisfies at least one of the following:
(1) a tap density of the carbon material is 1.0 g/cm³-1.5 g/cm³, and optionally 1.1 g/cm³-1.4 g/cm³;
(2) a gram capacity of the carbon material is 350 mAh/g-372 mAh/g, and optionally 353 mAh/g-371 mAh/g; and
(3) a degree of graphitization of the carbon material is 91.5%-98.5%, and optionally 92.5%-98.0%.

14. A preparation method of carbon material, comprising the following steps: step 1, providing a raw material having a plurality of pore structures; step 2, mixing the raw material with a filling material homogeneously at a predetermined ratio, and leaving the resulting product standing at a first temperature T₁ for a first time t₁ to obtain an intermediate; and step 3, leaving the resulting intermediate standing at a second temperature T₂ for a second time t₂ to obtain a carbon material, wherein the carbon material comprises a pore structure, and in a thermogravimetric analysis test of the carbon material under air atmosphere, a weight loss rate of the carbon material at 35°C to 790°C is less than or equal to 60%.

15. The method according to claim 14, wherein the raw material satisfies at least one of the following:
(1) the raw material comprises natural graphite, and optionally the natural graphite comprises one or more of flake graphite, natural spherical graphite, and microcrystalline graphite;
(2) a particle size by volume Dᵥ50 of the raw material is 10.0 µm-20.0 µm, and optionally 12.0 µm-18.0 µm; and
(3) a percentage of element carbon in the raw material is greater than or equal to 90.0wt%, and optionally greater than or equal to 95.0wt%.

16. The method according to claim 14 or 15, wherein the filling material satisfies at least one of the following:
(1) a softening point temperature of the filling material is 80°C-150°C, and optionally 90°C-140°C;
(2) a coking value of the filling material is 15%-40%, and optionally 15%-35%;
(3) a particle size by volume Dᵥ50 of the filling material is less than or equal to 6 µm, and optionally 2 µm-5 µm; and
(4) the filling material comprises one or more of coal asphalt, petroleum asphalt, polymer compounds, and resins, and optionally comprises petroleum asphalt.

17. The method according to any one of claims 14 to 16, wherein a mass ratio of the filling material to the raw material is (10-35):100, and optionally (15-32):100.

18. The method according to any one of claims 14 to 17, wherein after the mixing the raw material with a filling material homogeneously at a predetermined ratio, the process of heating up to the first temperature T₁ is a staged heating process, and optionally comprises a first heating process and a second heating process.

19. The method according to claim 18, wherein
the first heating process is heating up to 200°C-250°C and holding at that temperature for 1h-3h; and/or
the second heating process is heating to the first temperature T₁ and holding at that temperature for the first time t₁.

20. The method according to claim 18 or 19, wherein
a heating rate of the first heating process is 1°C/min-10°C/min, and optionally 1.5°C/min-8°C/min; and/or
a heating rate of the second heating process is 2°C/min-10°C/min, and optionally 2.5°C/min-8°C/min.

21. The method according to any one of claims 14 to 20, wherein
the first temperature T₁ is 700°C-1200°C, and optionally 800°C-1100°C; and/or
the first time t₁ is 1h-5h, and optionally 2h-4h.

22. The method according to any one of claims 14 to 21, wherein
the second temperature T₂ is 2000°C-2700°C, and optionally 2100°C-2600°C; and/or
the second time t₂ is 1.5h-6h, and optionally 2h-5h.

23. A secondary battery, comprising a negative electrode plate, wherein the negative electrode plate comprises the carbon material according to any one of claims 1 to 13 or a carbon material prepared using the method according to any one of claims 14 to 22.

24. An electric apparatus, comprising the secondary battery according to claim 23.
